# EUROPEAN PATENT APPLICATION

(11) **EP 4 542 748 A1**
(43) Date of publication of application: **23.04.2025**
(21) Application number: 22961819.4
(22) Date of filing: 14.10.2022
(51) Int. Cl.: H01M 50/30, H01M 50/547, H01M 10/613

(54) **BATTERY AND ELECTRIC DEVICE**

(71) Applicant: Contemporary Amperex Technology (Hong Kong) Limited, Central, Central And Western District (HK)
(72) Inventor: LIU, Ruidi, Ningde, Fujian 352100 (CN); WANG, Zengzhong, Ningde, Fujian 352100 (CN); WU, Youxin, Ningde, Fujian 352100 (CN); WANG, Peng, Ningde, Fujian 352100 (CN)
(74) Representative: Gong, Jinping
(86) International application number: PCT/CN2022/125520
(87) International publication number: WO 2024/077633

(57) **Abstract**

This application relates to the field of battery technologies, and in particular, to a battery and an electric device. The battery of this application includes a battery module, where the battery module includes at least one battery cell, and the battery module is disposed in a first direction, the first direction being a length direction of the battery or a moving direction of the electric device with the battery. The battery cell includes a plurality of surfaces, where the plurality of surfaces include a first surface with the largest area, and the plurality of surfaces further include two second surfaces opposite each other, the two second surfaces being both connected to the first surface. The battery cell further includes a pressure relief mechanism, where the pressure relief mechanism is disposed on the first surface or one of the second surfaces. According to the battery of this application, when the electric device experiences collision, the pressure relief mechanism is not prone to collision, thereby avoiding damage to the pressure relief mechanism and ensuring the normal use of the pressure relief mechanism.

## Description

### TECHNICAL FIELD

This application relates to the field of battery technologies, and in particular, to a battery and an electric device.

### BACKGROUND

In recent years, with the economic development, battery technologies have been widely used in various fields, especially in the field of new energy vehicles. Currently, new energy vehicles have brought a significant impact on conventional fossil fuel vehicles. As the core component of new energy vehicles, batteries play a crucial role in the development of new energy vehicles.

A plurality of battery cells are provided in a battery, where the battery cell is provided with a pressure relief mechanism. When an internal pressure or temperature of the battery cell increases due to vehicle collision or other reasons, high-pressure gas in the battery cell can be discharged to the outside of the battery cell through the pressure relief mechanism. However, due to the problem of arrangement position of the pressure relief mechanism, the pressure relief mechanism is prone to collision when the vehicle experiences collision, which leads to damage to the pressure relief mechanism, thus affecting normal operation of the battery and bringing safety hazards.

### SUMMARY

In view of the defects in the prior art, this application is intended to provide a battery and an electric device, so as to effectively solve the problem of damage to a pressure relief mechanism due to vehicle collision.

A first aspect of this application discloses a battery including:
a battery module, where the battery module includes at least one battery cell, and the battery module is disposed in a first direction, the first direction being a length direction of the battery or a moving direction of an electric device with the battery; where
the battery cell includes a plurality of surfaces, where the plurality of surfaces include a first surface with the largest area, and the plurality of surfaces further include two second surfaces opposite each other, the two second surfaces being both connected to the first surface; and the battery cell further includes a pressure relief mechanism, where the pressure relief mechanism is disposed on the first surface or one of the second surfaces.

According to the battery of this application, when the pressure relief mechanism is disposed on the second surface, the pressure relief mechanism may be disposed in the vertical direction or the moving direction of the electric device, so that when the electric device experiences collision in a lateral direction of the moving direction, the pressure relief mechanism does not experience collision, thereby avoiding damage to the pressure relief mechanism and ensuring normal use of the pressure relief mechanism. When the pressure relief mechanism is disposed on the first surface, because the first surface is the surface with the largest area, the pressure relief mechanism occupies a small portion of the first surface, so that when the electric device experiences collision, the pressure relief mechanism is not prone to collision, thereby avoiding the damage to the pressure relief mechanism and ensuring the normal use of the pressure relief mechanism.

In some embodiments of this application, the two second surfaces are opposite each other in a second direction, where the second direction intersects with the first direction. The second direction may be the vertical direction, so that the two second surfaces are opposite each other in the vertical direction, that is, the pressure relief mechanism is disposed in the vertical direction. In this way, when the electric device experiences collision in the lateral direction of the moving direction, the pressure relief mechanism does not experience collision.

In some embodiments of this application, the two second surfaces are opposite each other in the first direction. The two second surfaces are opposite each other in the first direction, that is, the pressure relief mechanism is disposed in the moving direction of the electric device, so that when the electric device experiences collision in the lateral direction of the moving direction, the pressure relief mechanism does not experience collision.

In some embodiments of this application, the first surface intersects with the horizontal plane. The first surface is the surface with the largest area in the battery cell. The first surface intersecting with the horizontal plane can increase the number of battery cells arranged in the horizontal plane to the greatest extent, thereby increasing overall energy density of the battery.

In some embodiments of this application, the second direction intersects with or is parallel to the horizontal plane. That is, the second direction may be substantially the vertical direction or the horizontal direction. Correspondingly, the second surface may be substantially disposed in the horizontal direction or the vertical direction.

In some embodiments of this application, a thermally conductive member is further included, where the thermally conductive member is disposed in the first direction; and the battery cell is at least in thermal conduction connection with the thermally conductive member through the first surface. The thermally conductive member is disposed in the first direction, so that any battery cell in the battery module can be subjected to heat exchange by the thermally conductive member. In addition, when the electric device experiences collision in a lateral direction, an impact force does not directly act on an end of the thermally conductive member, thereby avoiding the damage to the thermally conductive member. Meanwhile, the battery cell is in thermal conduction connection with the thermally conductive member through the first surface, which can ensure a contact area between the thermally conductive member and the battery cell to the greatest extent, thereby ensuring a heat exchange effect on the battery cell by the thermally conductive member.

In some embodiments of this application, at least two battery modules are included, where in a third direction, two sides of the thermally conductive member are respectively in thermal conduction connection with two of the battery modules, and the third direction intersects with both the first direction and the first surface. The two sides of the thermally conductive member are in thermal conduction connection with the first surfaces of the battery cells, thereby improving the heat exchange effect on the battery cells by the thermally conductive member.

In some embodiments of this application, the length direction of the battery is parallel to or intersects with the moving direction of the electric device. The battery of this application may be arranged in any direction in the electric device, facilitating arrangement of the battery.

In some embodiments of this application, a heat exchange medium channel is provided in the thermally conductive member. The heat exchange medium channel is used for circulation of a heat exchange medium, so that the flowing heat exchange medium can take away heat dissipated from the battery cell or heat up the battery cell, thereby improving the heat exchange efficiency of the battery cell.

In some embodiments of this application, the battery includes a plurality of thermally conductive members, where the plurality of thermally conductive members are arranged along a third direction, the third direction intersecting with both the first direction and the first surface. The plurality of thermally conductive members are arranged along the third direction and jointly configured to dissipate heat of the battery, effectively increasing the heat exchange speed of the battery.

In some embodiments of this application, in the third direction, two sides of the battery module are each provided with the thermally conductive member, and the battery module is in thermal conduction connection with the thermally conductive members on the two sides. The two sides of the battery module are in thermal conduction connection with the thermally conductive members, so that the two sides of the battery module are both subjected to heat dissipation, thereby effectively increasing the heat exchange speed of the battery.

In some embodiments of this application, in the third direction, the battery cell includes two first surfaces opposite each other, and the two first surfaces of the battery cell are each in thermal conduction connection with one of the thermally conductive members. When the battery cell has two first surfaces with the largest area, the two first surfaces are both subjected to heat dissipation, effectively increasing the heat exchange speed of the battery.

In some embodiments of this application, the battery cell includes an electrode assembly, where the electrode assembly includes a body portion and a tab protruding from the body portion, and the tab is electrically connected to an electrode terminal; and in a third direction, projections of the thermally conductive member and the body portion at least partially overlap and have an overlapping region, and the third direction intersects with both the first direction and the first surface. The thermally conductive member and the body portion at least partially overlapping in the third direction can implement effective heat exchange for the body portion through the thermally conductive member, thereby improving the heat exchange effect on the battery cell.

In some embodiments of this application, in a second direction, a size of the body portion is L1, and a size of the thermally conductive member is L2, where 0.5≤L2/L1≤1.5, and the first direction, the second direction, and the third direction intersect with each other. The value range of L2/L1 is set to be greater than 0.5 and less than 1.5, which ensures that the thermally conductive member has a sufficient thermal conduction area for performing heat exchange with the body portion, thereby significantly enhancing the heat exchange effect on the body portion by the thermally conductive member.

In some embodiments of this application, in the second direction, a size of the overlapping region is L3, where 0.5≤L3/L1≤1. Setting of the size of the overlapping region in the second direction allows for proper setting of a heat exchange area between the thermally conductive member and the body portion, thereby significantly enhancing the heat exchange effect on the body portion by the thermally conductive member.

In some embodiments of this application, the battery further includes a fluid collecting member, where the fluid collecting member is in fluid communication with a plurality of thermally conductive members; and
one end of the thermally conductive member in the first direction is provided with the fluid collecting member, or two ends of the thermally conductive member in the first direction are each provided with the fluid collecting member. The fluid collecting member is configured to supply or recycle the heat exchange medium in the heat exchange medium channel, so as to implement heat exchange with the battery. The fluid collecting member is disposed at the end of the thermally conductive member in the first direction, so that when the electric device experiences collision in the lateral direction, the impact force does not directly act on the end of the thermally conductive member, thereby avoiding the damage to the thermally conductive member and ensuring the safety and reliability of the battery in use.

In some embodiments of this application, two fluid collecting members are provided, where the two fluid collecting members are disposed at one end of the thermally conductive member in the first direction, the two fluid collecting members are arranged along a second direction, and the second direction intersects with both the first direction and the horizontal plane. The two fluid collecting members being jointly disposed at one end in the first direction and arranged along the second direction can effectively reduce space in the battery occupied by the fluid collecting members in the first direction, thereby facilitating arrangement of other structures in the battery and increasing the energy density of the battery. The two fluid collecting members being jointly disposed at one end in the first direction can also reduce the probability of the fluid collecting member being damaged due to collision in the first direction.

In some embodiments of this application, the battery cell includes an electrode terminal, where at least one electrode terminal is provided; and the pressure relief mechanism and the at least one electrode terminal are disposed on one of the second surfaces, or the pressure relief mechanism and the electrode terminal are respectively disposed on the two second surfaces. The pressure relief mechanism is in communication with the inside of the battery cell and is configured to discharge internal pressure of the battery cell when the internal pressure of the battery cell increases. The pressure relief mechanism and the electrode terminal may be disposed on one second surface or two second surfaces respectively as required, so that the pressure relief mechanism avoids the first surface on which heat exchange with the thermally conductive member occurs, facilitating smooth degassing by the pressure relief mechanism when thermal runaway occurs in the battery cell.

In some embodiments of this application, the battery cell includes two electrode terminals having opposite polarities, where the two electrode terminals are disposed on one of the second surfaces, or the two electrode terminals are respectively disposed on the two second surfaces. The electrode terminals having opposite polarities are disposed on one second surface or two second surfaces respectively of the battery cell as required, facilitating installation of the battery cell.

In some embodiments of this application, the battery cell includes an electrode terminal, where the electrode terminal is disposed on the first surface. The electrode terminal is disposed on the first surface, and power is supplied to the electric device through the electrode terminal on the first surface. The electrode terminal being disposed on the first surface can reduce space in the battery occupied by the electrode terminal in the second direction, thereby increasing the energy density of the battery.

In some embodiments of this application, the battery cell includes the first surface and a fourth surface opposite the first surface, where the first surface and the fourth surface are opposite each other in a third direction, the third direction intersecting with both the first direction and the first surface, a concave portion is provided at an edge of the fourth surface, the first surface is used for arranging the electrode terminal, and the electrode terminal protrudes from the first surface in the third direction and corresponds to the concave portion. The electrode terminal is disposed on the first surface, and the concave portion corresponding to the electrode terminal is provided at the edge of the fourth surface, so that the electrode terminal of an adjacent battery cell is accommodated in the concave portion, and an operation space for electrical connection is left, allowing the battery to have a more compact overall structure and high space utilization.

In some embodiments of this application, the plurality of surfaces further include two third surfaces opposite each other in the first direction, and the first direction, the second direction, and the third direction intersect with each other; and the electrode terminal includes two electrode terminals having opposite polarities, where the two electrode terminals are disposed on one of the third surfaces, or the two electrode terminals are respectively disposed on the two third surfaces. The electrode terminals having opposite polarities are disposed on one third surface or two third surfaces respectively of the battery cell as required, facilitating installation of the battery cell.

In some embodiments of this application, the battery cell includes an electrode assembly, where the electrode assembly is a flat wound structure, and an outer surface of the electrode assembly includes two flat surfaces, the two flat surfaces facing each other in a third direction; or
the electrode assembly is a laminated structure, and a first electrode plate, separator, and second electrode plate of the electrode assembly are stacked along a third direction.

The third direction intersects with both the first direction and the first surface. Regardless of whether the electrode assembly is arranged as a laminated structure or wound structure, the electrode assembly can effectively supply power to the electric device.

In some embodiments of this application, the battery module includes at least two battery cells, where the at least two battery cells are arranged along the first direction. The at least two battery cells are arranged along the first direction, so that the thermally conductive member can be disposed in the first direction when heat exchange is needed for the battery cells, facilitating separate heat exchange for the at least two battery cells in the battery module, thereby increasing the heat exchange speed of the thermally conductive member.

In some embodiments of this application, in the first direction, a maximum size of the battery cell is L, and in a second direction, a maximum size of the battery cell is H, where a value range of L/H is 0.5-6, and the second direction intersects with both the first direction and the horizontal plane. The battery cell being set according to the above size ratio can increase the power of the battery cell to the greatest extent on the basis of ensuring the support strength of the battery cell.

In some embodiments of this application, in a third direction, a maximum size of the battery cell is D, where a value range of L/D is 1-30; and the first direction, the second direction, and the third direction intersect with each other. The battery cell being set according to the above size ratio can increase the power of the battery cell to the greatest extent on the basis of ensuring the support strength of the battery cell.

In some embodiments of this application, the electrode terminal and the pressure relief mechanism are disposed on one of the second surfaces, the battery includes a support plate, the battery cell is fixedly connected to the support plate through the other second surface provided with no electrode terminal, and the second direction intersects with both the first direction and the horizontal plane. The battery cell is connected to the support plate through one end provided with no electrode terminal such that the battery cell is fixed in a box, facilitating installation and fixing of the battery cell.

In some embodiments of this application, the other second surface is fixedly connected to the support plate through a first adhesion layer, and the thermally conductive member is in thermal conduction connection with the first surface through a second adhesion layer, where a thermal conductivity coefficient of the first adhesion layer is less than or equal to a thermal conductivity coefficient of the second adhesion layer. because the first adhesion layer is used to connect the second surface and the support plate, and the second adhesion layer is used for thermal conduction connection between the first surface and the thermally conductive member, the thermal conductivity coefficient of the first adhesion layer is set to be less than or equal to the thermal conductivity coefficient of the second adhesion layer, thereby ensuring more effective heat exchange for the battery cell through the thermally conductive member.

In some embodiments of this application, a value range of a ratio of the thermal conductivity coefficient of the first adhesion layer to the thermal conductivity coefficient of the second adhesion layer is 0.1-1. Such setting according to the above ratio can allow for effective heat exchange for the battery cell through the thermally conductive member.

A second aspect of this application discloses an electric device including the battery according to any one of the foregoing embodiments, where the battery is configured to supply electrical energy so as to drive the electric device to move.

In some embodiments of this application, under a condition that the length direction of the battery is different from the moving direction of the electric device, the first direction is the moving direction of the electric device. With the first direction being set as the moving direction of the electric device, when the pressure relief mechanism is disposed on the second surface, the electrode terminal may be disposed in the vertical direction or the moving direction of the electric device, so that when the electric device experiences collision in a lateral direction of the moving direction, the electrode terminal does not experience collision, thereby avoiding the damage to the electrode terminal and ensuring the normal power supply of the battery. When the electrode terminal is disposed on the first surface, because the first surface is the surface with the largest area, the electrode terminal occupies a small portion of the first surface, so that when the electric device experiences collision, the electrode terminal is not prone to collision, thereby avoiding the damage to the electrode terminal and ensuring the normal power supply of the battery.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same components. In the accompanying drawings:
FIG. 1 is a schematic structural diagram of a vehicle according to an embodiment of this application;
FIG. 2 is a schematic structural exploded view of a battery according to an embodiment of this application;
FIG. 3 is a schematic structural diagram of a battery module according to an embodiment of this application;
FIG. 4 is a schematic structural diagram of a battery cell according to an embodiment of this application;
FIG. 5 is a schematic structural exploded view of a battery cell according to an embodiment of this application;
FIG. 6 is a schematic structural diagram of a battery cell according to an embodiment of this application;
FIG. 7 is a schematic structural diagram of a battery cell according to an embodiment of this application;
FIG. 8 is a schematic structural diagram of a battery according to an embodiment of this application;
FIG. 9 is a schematic structural exploded view of a battery according to an embodiment of this application;
FIG. 10 is a schematic structural diagram of a battery module according to an embodiment of this application;
FIG. 11 is a schematic structural diagram of a battery module according to an embodiment of this application;
FIG. 12 is a schematic structural diagram of a battery module according to an embodiment of this application;
FIG. 13 is a schematic structural diagram of a battery cell according to an embodiment of this application;
FIG. 14 is a schematic structural diagram of a battery module according to an embodiment of this application;
FIG. 15 is a schematic structural diagram of a battery cell according to an embodiment of this application;
FIG. 16 is a schematic structural diagram of a battery cell according to an embodiment of this application;
FIG. 17 is a schematic structural diagram of a battery module according to an embodiment of this application;
FIG. 18 is a schematic structural diagram of a battery module according to an embodiment of this application;
FIG. 19 is a schematic structural diagram of a battery cell according to an embodiment of this application;
FIG. 20 is a schematic structural diagram of a thermally conductive member according to an embodiment of this application;
FIG. 21 is a schematic structural diagram of a second portion according to an embodiment of this application;
FIG. 22 is a schematic structural assembly diagram of a second portion and a battery module according to an embodiment of this application;
FIG. 23 is a schematic diagram of an enlarged structure of part A according to an embodiment of this application;
FIG. 24 is a schematic structural cross-sectional view along B-B according to an embodiment of this application;
FIG. 25 is a schematic diagram of an enlarged structure of part C according to an embodiment of this application;
FIG. 26 is a schematic diagram of an internal structure of a second portion according to an embodiment of this application;
FIG. 27 is a schematic diagram of an enlarged structure of part D according to an embodiment of this application; and
FIG. 28 is a schematic diagram of a distribution structure of a battery in an electric device according to an embodiment of this application.

Reference signs in specific embodiments are described as follows:
1. vehicle;
10. battery; 11. controller; 12. motor;
20. battery module; 21. battery cell; 211, housing; 2111. first surface; 2112. third surface; 212. cover plate; 2121. second surface; 213. electrode assembly; 2131. body portion; 2132. tab; 214. electrode terminal; 215. pressure relief mechanism;
30. box; 31. first portion; 311. support plate; 32. second portion; 321. baffle;
40. thermally conductive member;
50. fluid collecting member;
61. first adhesion layer; and 62. second adhesion layer.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

It should be noted that, unless otherwise stated, the technical terms or scientific terms used in the embodiments of this application should be in the ordinary meaning as understood by persons skilled in the field to which the embodiments of this application belong.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In addition, the technical terms "first", "second", and the like are merely for the purpose of description, and shall not be understood as any indication or implication of relative importance or any implicit indication of the number of technical features indicated. In the description of the embodiments of this application, "a plurality of" means at least two unless otherwise specifically stated.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection through an intermediary, an internal communication between two elements, or an interaction between two elements. Persons of ordinary skills in the art can understand specific meanings of these terms in this application as appropriate to specific situations.

In the description of the embodiments of this application, unless otherwise clearly specified and defined, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. Lithium-ion batteries have been widely used in mobile and portable electric appliances due to their advantages such as high energy density, high average open circuit voltage, and long cycle life.

The inventors of this application have noted that a plurality of battery cells are provided in a battery, where the battery cell is provided with a pressure relief mechanism. When an internal pressure or temperature of the battery cell increases due to vehicle collision or other reasons, high-pressure gas in the battery cell can be discharged to the outside of the battery cell through the pressure relief mechanism. However, due to the problem of arrangement position of the pressure relief mechanism, the pressure relief mechanism is prone to collision when the vehicle experiences collision, which leads to damage to the pressure relief mechanism and failure in timely and effective discharge of the high-pressure gas in the battery cell, thus leading to further damage to the battery and bringing safety hazards.

To solve the problem of the damage to an electrode terminal when the vehicle experiences collision, the inventors of this application, after in-depth research, have designed a battery including a battery module, where the battery module includes at least one battery cell, and the battery module is disposed in a first direction, the first direction being a length direction of the battery or a moving direction of an electric device with the battery. The battery cell includes a plurality of surfaces, where the plurality of surfaces include a first surface with the largest area, and the plurality of surfaces further include two second surfaces opposite each other in a second direction, the second direction intersecting with the first direction. The battery cell further includes a pressure relief mechanism, where the pressure relief mechanism is disposed on the first surface or one of the second surfaces.

According to the battery of this application, when the pressure relief mechanism is disposed on the second surface, because the two second surfaces are opposite each other in the second direction, and the second direction intersects with the first direction, that is, the pressure relief mechanism is not disposed at an end of the battery in the length direction or an end of the electric device in the moving direction, so that when the electric device experiences collision in the moving direction, the pressure relief mechanism does not experience collision, thereby avoiding the damage to the pressure relief mechanism and ensuring the normal use of the pressure relief mechanism. When the pressure relief mechanism is disposed on the first surface, because the first surface is the surface with the largest area, the pressure relief mechanism occupies a small portion of the first surface, so that when the electric device experiences collision, the pressure relief mechanism is not prone to collision, thereby avoiding the damage to the pressure relief mechanism and ensuring the normal use of the pressure relief mechanism.

This application provides a battery and an electric device with such battery. Such batteries are applicable to various electric devices using batteries, for example, mobile phones, portable devices, notebook computers, electric bicycles, electric toys, electric tools, electric vehicles, ships, and spacecrafts. For example, spacecrafts include airplanes, rockets, space shuttles, spaceships, and the like. The batteries are configured to supply electrical energy to the foregoing electric devices.

It should be understood that the technical solutions described in the embodiments of this application are not only applicable to the batteries and electric devices described above, but also applicable to all batteries including a box and electric devices using batteries. However, for the brevity of description, in the following embodiments, an electric vehicle is used as an example for description.

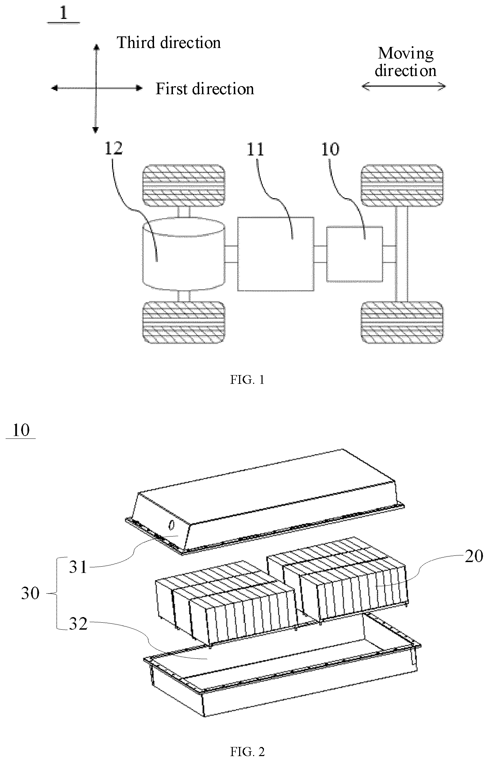

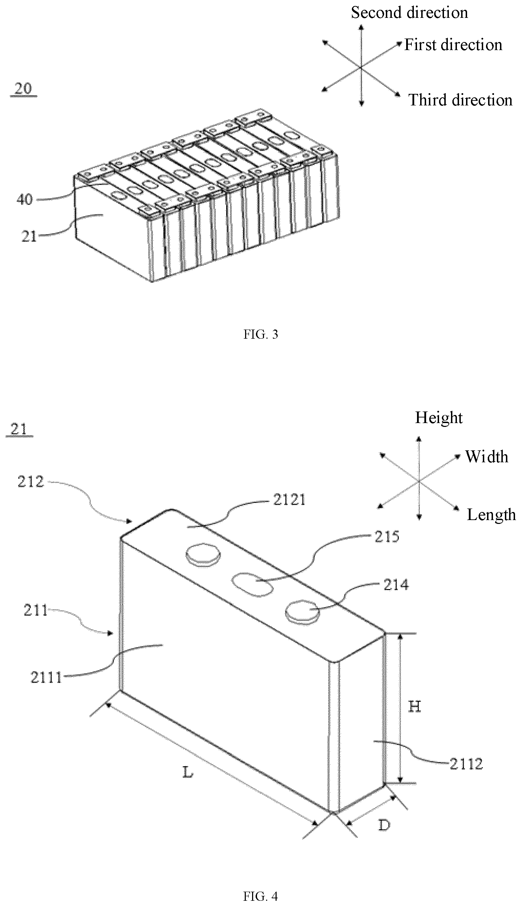

FIG. 1 is a schematic structural diagram of a vehicle 1 according to some embodiments of this application. FIG. 2 is a schematic structural exploded view of a battery 10 according to an embodiment of this application. FIG. 3 is a schematic structural diagram of a battery module 20 according to an embodiment of this application. As shown in FIGs. 1 to 3, the vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 10 inside, where the battery 10 may be disposed at the bottom, front, or rear of the vehicle 1. The battery 10 may be configured to supply power to the vehicle 1. For example, the battery 10 may be used as an operational power source for the vehicle 1. The vehicle 1 may further include a controller 11 and a motor 12, where the controller 11 is configured to control the battery 10 to supply power to the motor 12, for example, to satisfy operating power needs during start, navigation, and traveling of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

In order to meet different requirements for power use, the battery 10 may include a plurality of battery cells 21. A battery cell 21 is a smallest element constituting a battery module 20 or battery pack. A plurality of battery cells 21 can be connected in series and/or in parallel through electrode terminals for various application scenarios. The battery 10 mentioned in this application is a battery pack. The plurality of battery cells 21 may be connected in series, parallel, or series-parallel, where being connected in series-parallel means a combination of series and parallel connections. In the embodiments of this application, the plurality of battery cells 21 may be directly combined into a battery pack, or they may be first combined into battery modules 20 which are then combined into a battery pack.

As shown in FIGs. 2 and 3, the battery 10 may include a plurality of battery modules 20 and a box 30, where the plurality of battery modules 20 are accommodated in the box 30. The box 30 is configured to accommodate the battery cells 21 or the battery modules 20 so as to prevent liquids or other foreign matter from affecting charging or discharging of the battery cells 21. The box 30 may be an individual simple three-dimensional structure such as a rectangular, cylindrical, or spherical structure or may be a complex three-dimensional structure combining simple three-dimensional structures such as rectangular, cylindrical, or spherical structures. This is not limited in the embodiments of this application. The box 30 may be made of an alloy material such as aluminum alloy or iron alloy, a polymer material such as polycarbonate or polyisocyanurate foam, or a composite material produced from materials such as glass fiber and epoxy resin. This is not limited in the embodiments of this application either.

In some embodiments, the box 30 may include a first portion 31 and a second portion 32. The first portion 31 and the second portion 32 fit together so that the first portion 31 and the second portion 32 jointly define a space for accommodating the battery cell 21. The second portion 32 may be a hollow structure with an opening at one end, the first portion 31 may be a plate-shaped structure, and the first portion 31 covers an opening side of the second portion 32, so that the first portion 31 and the second portion 32 jointly define a space for accommodating the battery cells 21. Alternatively, both the first portion 31 and the second portion 32 may be hollow structures with an opening at one side, and the opening side of the first portion 31 fits with the opening side of the second portion 32.

The battery module 20 may include a plurality of battery cells 21. The plurality of battery cells 21 may be connected in series, parallel, or series-parallel to form a battery module 20 first, and then a plurality of battery modules 20 are connected in series, parallel, or series-parallel to form a battery 10. The battery cell 21 may be cylindrical, flat, cuboid, or of other shapes. This is not limited in the embodiments of this application either. The battery cell 21 typically includes a cylindrical cell, a prismatic cell, a pouch cell, a cell with multi-prismatic cross section, and the like. This is not limited in the embodiments of this application either. However, for brevity of description, the following embodiments are all described by taking a prismatic lithium-ion battery cell 21 as an example.

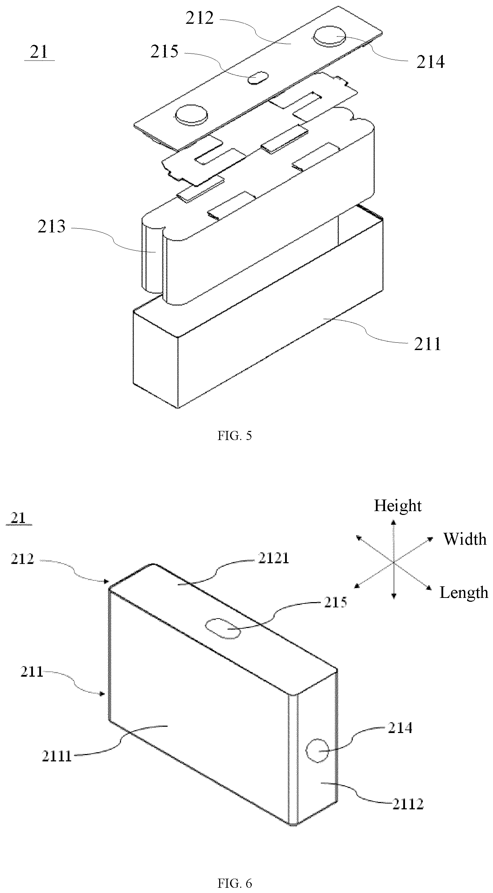

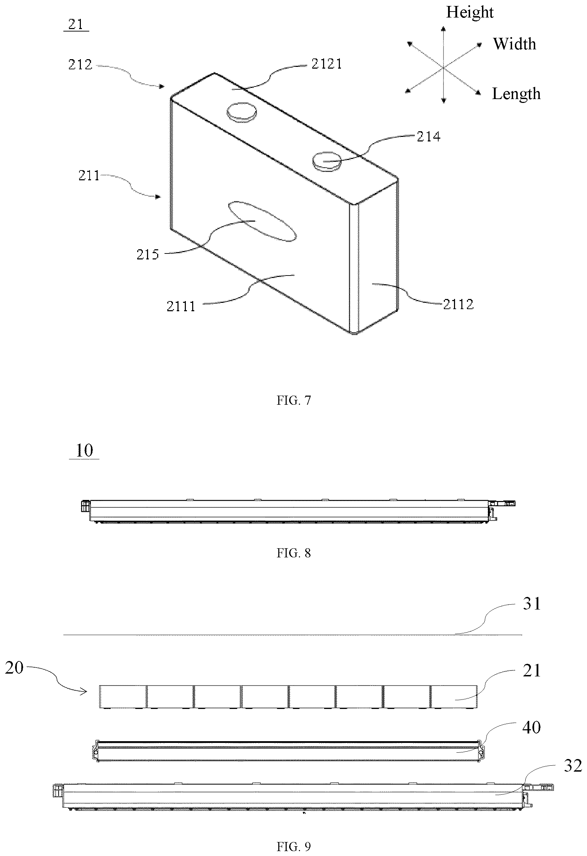

FIG. 4 is a schematic structural diagram of a battery cell 21 according to an embodiment of this application. FIG. 5 is a schematic structural exploded view of a battery cell 21 according to an embodiment of this application. FIG. 6 is a schematic structural diagram of a battery cell according to an embodiment of this application. FIG. 7 is a schematic structural diagram of a battery cell according to an embodiment of this application. The battery cell 21 refers to a smallest element constituting the battery 10. As shown in FIGs. 4 to 7, the battery cell 21 includes an end cover 212, a housing 211, and an electrode assembly 213.

The end cover 212 refers to a component that covers an opening of the housing 211 to isolate an internal environment of the battery cell 21 from an external environment. Without limitation, a shape of the end cover 212 may be adapted to a shape of the housing 211 such that the end cover 212 fits with the housing 211. Optionally, the end cover 212 may be made of a material with certain hardness and strength (for example, aluminum alloy), so that the end cover 212 is less likely to deform when subjected to extrusion and collision, allowing the battery cell 21 to have higher structural strength and enhanced safety performance. The end cover 212 may be provided with functional components such as an electrode terminal 214. The electrode terminal 214 may be configured to be electrically connected to the electrode assembly 213 for outputting or inputting electrical energy of the battery cell 21. In some embodiments, the end cover 212 may further be provided with a pressure relief mechanism 215 for releasing internal pressure when the internal pressure or temperature of the battery cell 21 reaches a threshold. In some embodiments, an insulator may further be disposed on an inner side of the end cover 212. The insulator may be configured to isolate an electrically connected component in the housing 211 from the end cover 212 so as to reduce the risk of short circuit. For example, the insulator may be made of plastic, rubber, or the like.

The housing 211 is an assembly configured to cooperate with the end cover 212 to form an internal environment of the battery cell 21, where the formed internal environment can be used to accommodate the electrode assembly 213, an electrolyte (not shown in the figure), and other components. The housing 211 and the end cover 212 may be separate components, an opening may be provided on the housing 211, and the end cover 212 covers the opening to form the internal environment of the battery cell 21. Without limitation, the end cover 212 and the housing 211 may alternatively be integrated. Specifically, the end cover 212 and the housing 211 may form a shared connection surface before other components are placed inside the housing, and then the end cover 212 covers the housing 211 when the inside of the housing 211 needs to be enclosed. The housing 211 may be of various shapes and sizes, such as a cuboid shape, a cylindrical shape, and a hexagonal prism shape. Specifically, a shape of the housing 211 may be determined according to a specific shape and size of the electrode assembly 213. The housing 211 may be made of various materials, such as copper, iron, aluminum, stainless steel, aluminum alloy, and plastic. This is not particularly limited in the embodiments of this application.

The electrode assembly 213 is a component in which an electrochemical reaction takes place in the battery cell 21. The housing 211 may be provided with one or more electrode assemblies 213 inside. The electrode assembly 213 is mainly formed by winding or stacking a positive electrode plate and a negative electrode plate, and a separator is typically disposed between the positive electrode plate and the negative electrode plate. Parts of the positive electrode plate and the negative electrode plate with active materials constitute a body portion of the electrode assembly 213, while parts of the positive electrode plate and the negative electrode plate without active materials each constitute a tab (not shown in the figure). A positive electrode tab and a negative electrode tab may both be located at one end of the body portion or be located at two ends of the body portion respectively. During charge and discharge of the battery, a positive electrode active material and a negative electrode active material react with an electrolyte, and the tabs are connected to the electrode terminal 214 to form a current loop.

FIG. 8 is a schematic structural diagram of a battery 10 according to an embodiment of this application. FIG. 9 is a schematic structural exploded view of a battery 10 according to an embodiment of this application. As shown in FIGs. 3 to 9, in some embodiments of this application, the battery 10 includes a battery module 20, where the battery module 20 includes at least one battery cell 21, and the battery module 20 is disposed in a first direction, the first direction being a length direction of the battery 10 or a moving direction of an electric device with the battery 10. The battery cell 21 includes a plurality of surfaces, where the plurality of surfaces include a first surface 2111 with the largest area, and the plurality of surfaces further include two second surfaces 2121 opposite each other in a second direction, the second direction intersecting with both the first direction and the horizontal plane. The battery cell 21 further includes a pressure relief mechanism 215, where the pressure relief mechanism 215 is disposed on the first surface 2111 or one of the second surfaces 2121.

Specifically, as shown in FIGs. 1, 3, 4, and 9, in some embodiments of this application, the battery cell 21 may be a prismatic battery cell 21. The battery cell 21 includes two first surfaces 2111 opposite each other in the first direction, two second surfaces 2121 opposite each other in the second direction, and two third surfaces 2112 opposite each other in a third direction. The second surface 2121 is provided with the pressure relief mechanism 215. The first direction is the length direction of the battery 10 or the moving direction of the electric device 1. The second direction is the vertical direction. The third direction is a width direction of the battery 10 or a lateral direction of the electric device 1.

In a case that the pressure relief mechanism 215 is disposed on the second surface 2121, that is, the pressure relief mechanism 215 is disposed in the vertical direction, when the electric device 1 experiences collision in a lateral direction of the moving direction, the pressure relief mechanism 215 does not experience collision, thereby avoiding the damage to the pressure relief mechanism 215 and ensuring the normal use of the pressure relief mechanism 215.

As shown in FIGs. 1, 3, 7, and 9, in some embodiments of this application, the battery cell 21 may be a prismatic battery cell 21. The battery cell 21 includes two first surfaces 2111 opposite each other in the first direction, two second surfaces 2121 opposite each other in the second direction, and two third surfaces 2112 opposite each other in a third direction. The first surface 2111 is provided with the pressure relief mechanism 215. The first direction is the length direction of the battery 10 or the moving direction of the electric device 1. The second direction is the vertical direction. The third direction is a width direction of the battery 10 or a lateral direction of the electric device 1.

When the pressure relief mechanism 215 is disposed on the first surface 2111, because the first surface 2111 is the surface with the largest area, the pressure relief mechanism 215 occupies a small portion of the first surface 2111, so that when the electric device 1 experiences collision, the pressure relief mechanism 215 is not prone to collision, thereby avoiding the damage to the pressure relief mechanism 215 and ensuring the normal use of the pressure relief mechanism 215.

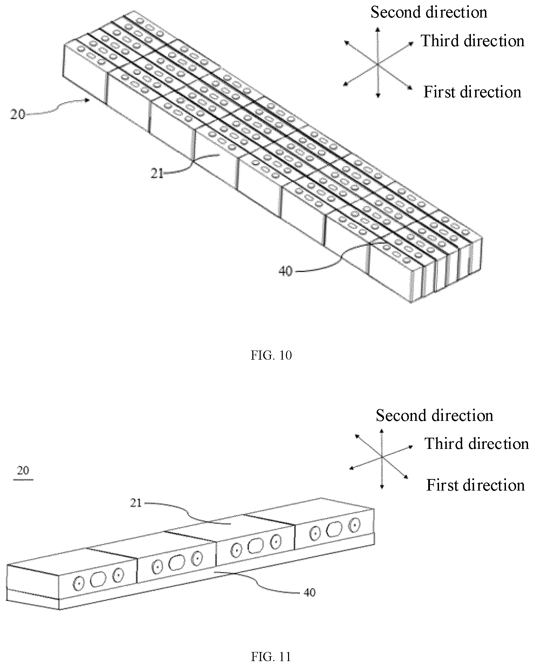

FIG. 10 is a schematic structural diagram of a battery module 20 according to an embodiment of this application. As shown in FIGs. 1, 4, 9, and 10, in some embodiments of this application, the battery cell 21 is a prismatic battery cell 21. The battery cell 21 includes two first surfaces 2111 opposite each other in a third direction, two second surfaces 2121 opposite each other in the second direction, and two third surfaces 2112 opposite each other in the first direction. The second surface 2121 is provided with the pressure relief mechanism 215. The first direction is the length direction of the battery 10 or the moving direction of the electric device 1. The second direction is the vertical direction. The third direction is a width direction of the battery 10 or a lateral direction of the electric device 1.

In a case that the pressure relief mechanism 215 is disposed on the second surface 2121, that is, the pressure relief mechanism 215 is disposed in the vertical direction, when the electric device 1 experiences collision in a lateral direction of the moving direction, the pressure relief mechanism 215 does not experience collision, thereby avoiding the damage to the pressure relief mechanism 215 and ensuring the normal use of the pressure relief mechanism 215.

As shown in FIGs. 1, 7, 9, and 10, in some embodiments of this application, the battery cell 21 is a prismatic battery cell 21. The battery cell 21 includes two first surfaces 2111 opposite each other in a third direction, two second surfaces 2121 opposite each other in the second direction, and two third surfaces 2112 opposite each other in the first direction. The first surface 2111 is provided with the pressure relief mechanism 215. The first direction is the length direction of the battery 10 or the moving direction of the electric device 1. The second direction is the vertical direction. The third direction is a width direction of the battery 10 or a lateral direction of the electric device 1.

When the pressure relief mechanism 215 is disposed on the first surface 2111, because the first surface 2111 is the surface with the largest area, the pressure relief mechanism 215 occupies a small portion of the first surface 2111, so that when the electric device 1 experiences collision, the pressure relief mechanism 215 is not prone to collision, thereby avoiding the damage to the pressure relief mechanism 215 and ensuring the normal use of the pressure relief mechanism 215.

FIG. 11 is a schematic structural diagram of a battery module 20 according to an embodiment of this application. As shown in FIGs. 1, 4, 9, and 11, in some embodiments of this application, the battery cell 21 is a prismatic battery cell 21. The battery cell 21 includes two first surfaces 2111 opposite each other in the second direction, two second surfaces 2121 opposite each other in the first direction, and two third surfaces 2112 opposite each other in a third direction. The second surface 2121 is provided with the pressure relief mechanism 215. The first direction is the length direction of the battery 10 or the moving direction of the electric device 1. The second direction is the vertical direction. The third direction is a width direction of the battery 10 or a lateral direction of the electric device 1.

In a case that the pressure relief mechanism 215 is disposed on the second surface 2121, that is, the pressure relief mechanism 215 is disposed at an end of the battery 10 in the length direction or an end of the electric device 1 in the moving direction, when the electric device 1 experiences collision in a lateral direction of the moving direction, the pressure relief mechanism 215 does not experience collision, thereby avoiding the damage to the pressure relief mechanism 215 and ensuring the normal use of the pressure relief mechanism 215.

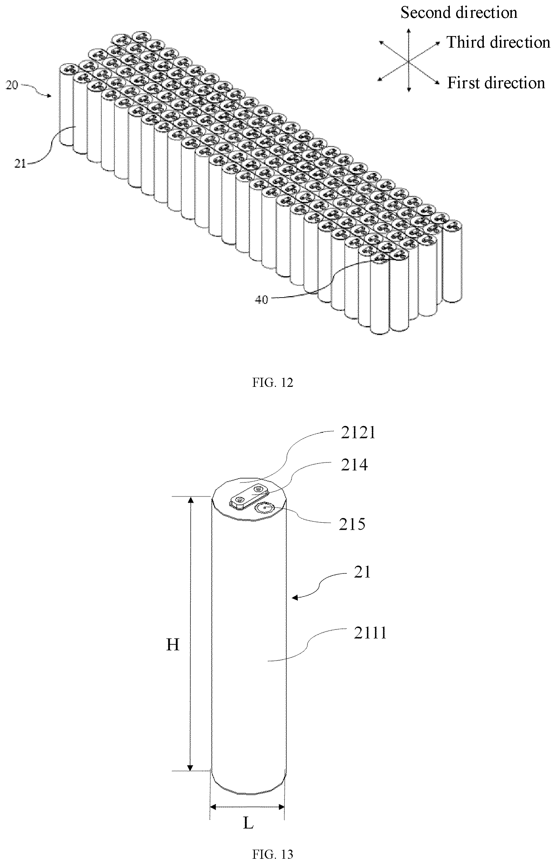

FIG. 12 is a schematic structural diagram of a battery module 20 according to an embodiment of this application. FIG. 13 is a schematic structural diagram of a battery cell 21 according to an embodiment of this application. As shown in FIGs. 1, 9, 12, and 13, in some embodiments of this application, the battery cell 21 is a cylindrical battery cell 21. At least two battery cells 21 are arranged along the first direction to form a battery module 20. The battery cell 21 includes a cylindrical first surface 2111 and two second surfaces 2121 opposite each other in the second direction. The second surface 2121 is provided with the pressure relief mechanism 215. The first direction is the length direction of the battery 10 or the moving direction of the electric device 1. The second direction is the vertical direction.

In a case that the pressure relief mechanism 215 is disposed on the second surface 2121, that is, the pressure relief mechanism 215 is disposed in the vertical direction, when the electric device 1 experiences collision in a lateral direction of the moving direction, the pressure relief mechanism 215 does not experience collision, thereby avoiding the damage to the pressure relief mechanism 215 and ensuring the normal use of the pressure relief mechanism 215.

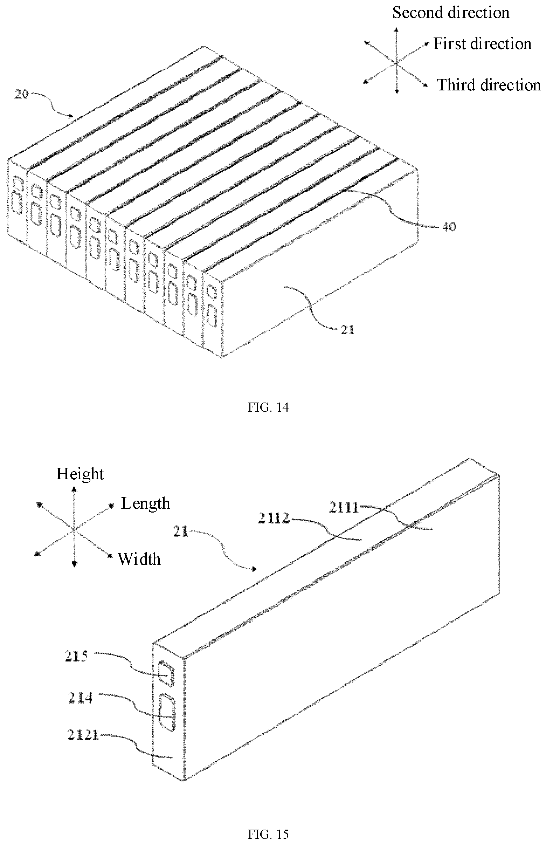

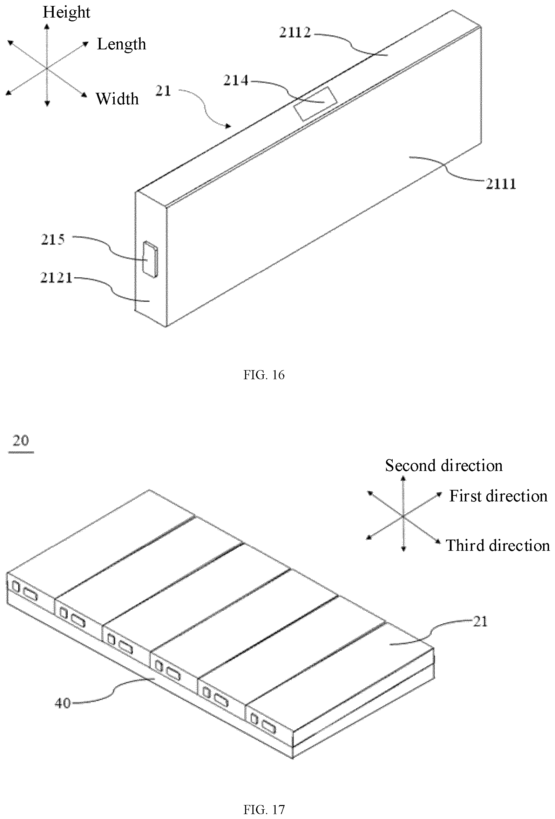

FIG. 14 is a schematic structural diagram of a battery module 20 according to an embodiment of this application. FIG. 15 is a schematic structural diagram of a battery cell according to an embodiment of this application. FIG. 16 is a schematic structural diagram of a battery cell according to an embodiment of this application. As shown in FIGs. 1, 9, 14, 15, and 16, in some embodiments of this application, the battery cell 21 is a prismatic battery cell 21. The battery cell 21 includes two first surfaces 2111 opposite each other in a third direction, two second surfaces 2121 opposite each other in the first direction, and two third surfaces 2112 opposite each other in the second direction. The second surface 2121 is provided with the pressure relief mechanism 215. The first direction is the length direction of the battery 10 or the moving direction of the electric device 1. The second direction is the vertical direction. The third direction is a width direction of the battery 10 or a lateral direction of the electric device 1.

In a case that the pressure relief mechanism 215 is disposed on the second surface 2121, that is, the pressure relief mechanism 215 is disposed at an end of the battery 10 in the length direction or an end of the electric device 1 in the moving direction, when the electric device 1 experiences collision in a lateral direction of the moving direction, the pressure relief mechanism 215 does not experience collision, thereby avoiding the damage to the pressure relief mechanism 215 and ensuring the normal use of the pressure relief mechanism 215.

FIG. 17 is a schematic structural diagram of a battery module according to an embodiment of this application. As shown in FIGs. 1, 9, 15, and 17, in some embodiments of this application, the battery cell 21 is a prismatic battery cell 21. The battery cell 21 includes two first surfaces 2111 opposite each other in the second direction, two second surfaces 2121 opposite each other in the first direction, and two third surfaces 2112 opposite each other in a third direction. The second surface 2121 is provided with the pressure relief mechanism 215. The first direction is the length direction of the battery 10 or the moving direction of the electric device 1. The second direction is a width direction of the battery 10 or a lateral direction of the electric device 1. The third direction is the vertical direction.

In a case that the pressure relief mechanism 215 is disposed on the second surface 2121, that is, the pressure relief mechanism 215 is disposed at an end of the battery 10 in the length direction or an end of the electric device 1 in the moving direction, when the electric device 1 experiences collision in a lateral direction of the moving direction, the pressure relief mechanism 215 does not experience collision, thereby avoiding the damage to the pressure relief mechanism 215 and ensuring the normal use of the pressure relief mechanism 215.

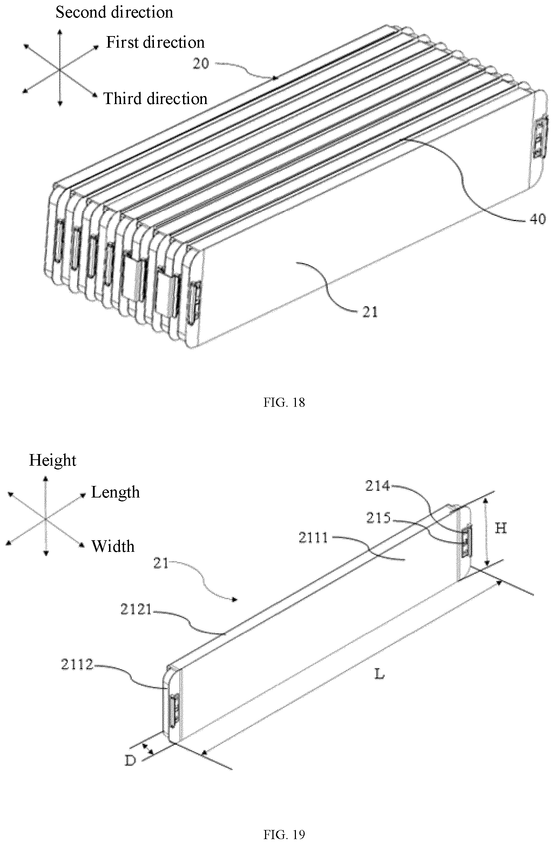

FIG. 18 is a schematic structural diagram of a battery module according to an embodiment of this application. FIG. 19 is a schematic structural diagram of a battery cell according to an embodiment of this application. As shown in FIGs. 1, 9, 18, and 19, in some embodiments of this application, the battery cell 21 is a prismatic battery cell 21. The battery cell 21 includes two first surfaces 2111 opposite each other in a third direction, two second surfaces 2121 opposite each other in the second direction, and two third surfaces 2112 opposite each other in the first direction. The first surface 2111 is provided with the pressure relief mechanism 215. The first direction is the length direction of the battery 10 or the moving direction of the electric device 1. The second direction is the vertical direction. The third direction is a width direction of the battery 10 or a lateral direction of the electric device 1.

When the pressure relief mechanism 215 is disposed on the first surface 2111, because the first surface 2111 is the surface with the largest area, the pressure relief mechanism 215 occupies a small portion of the first surface 2111, so that when the electric device 1 experiences collision, the pressure relief mechanism 215 is not prone to collision, thereby avoiding the damage to the pressure relief mechanism 215 and ensuring the normal use of the pressure relief mechanism 215.

According to the battery 10 of this application, when the pressure relief mechanism 215 is disposed on the second surface 2121, the pressure relief mechanism 215 may be disposed in the vertical direction or the moving direction of the electric device 1, so that when the electric device 1 experiences collision in the lateral direction of the moving direction, the pressure relief mechanism 215 does not experience collision, thereby avoiding the damage to the pressure relief mechanism 215 and ensuring the normal power supply of the battery 10. When the pressure relief mechanism 215 is disposed on the first surface 2111, because the first surface 2111 is the surface with the largest area, the pressure relief mechanism 215 occupies a small portion of the first surface 2111, so that when the electric device 1 experiences collision, the pressure relief mechanism 215 is not prone to collision, thereby avoiding the damage to the pressure relief mechanism 215 and ensuring the normal power supply of the battery 10.

As shown in FIGs. 3 and 4, in some embodiments of this application, the first surface 2111 intersects with the horizontal plane.

Specifically, in some embodiments of this application, the first surface 2111 may be arranged in the vertical direction.

As shown in FIGs. 4 and 10, in some embodiments of this application, the first surface 2111 intersects with the horizontal plane.

As shown in FIGs. 12 and 13, in some embodiments of this application, the first surface 2111 intersects with the horizontal plane.

As shown in FIGs. 14 and 15, in some embodiments of this application, the first surface 2111 intersects with the horizontal plane.

As shown in FIGs. 18 and 19, in some embodiments of this application, the first surface 2111 intersects with the horizontal plane.

Because the first surface 2111 is the surface with the largest area in the battery cell 21, the first surface 2111 intersecting with the horizontal plane can increase the number of battery cells 21 arranged in the horizontal plane to the greatest extent, thereby increasing overall energy density of the battery 10.

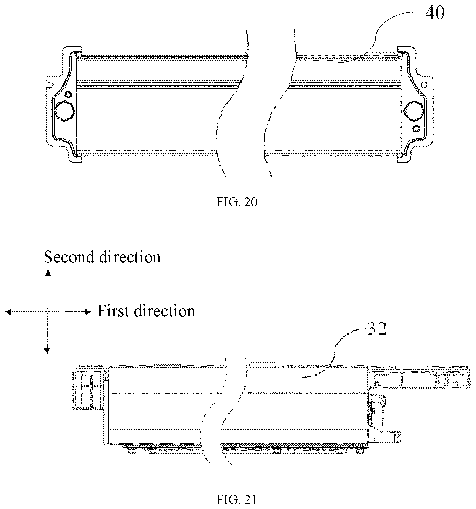

FIG. 20 is a schematic structural diagram of a thermally conductive member 40 according to an embodiment of this application. As shown in FIGs. 4, 9, 10, and 20, in some embodiments of this application, a thermally conductive member 40 is further included, where the thermally conductive member 40 is disposed in the first direction; and each battery cell 21 of the battery module 20 is at least in thermal conduction connection with the thermally conductive member 40 through the first surface 2111.

Specifically, the thermally conductive member 40 can be in thermal conduction connection with the battery cell 21, so that heat of the battery cell 21 is conducted to the thermally conductive member 40, thereby implementing heat exchange for the battery cell 21. The heat exchange for the battery cell 21 includes cooling and heat dissipation of the battery cell 21 or heating of the battery cell 21. The thermally conductive member 40 may be a thermally conductive plate, a thermally conductive adhesive, or a thermally conductive structure. In some embodiments, the thermally conductive plate may be a metal plate such as a copper plate or an aluminum plate, or may be made of another material with desirable thermal conductivity coefficient. In some embodiments, the thermally conductive member may further be provided with a cavity inside. In some embodiments of this application, the thermally conductive member 40 is a thermally conductive plate. Because the first surface 2111 is in thermal conduction connection with the thermally conductive member 40 and the first surface 2111 intersects with the horizontal plane, the thermally conductive member 40 also intersects the horizontal plane. In some embodiments of this application, the thermally conductive member 40 is disposed in the vertical direction and extends along the first direction.

As shown in FIGs. 4, 9, 10, and 20, the thermally conductive member 40 is disposed in the first direction and intersects with the horizontal plane, and the battery cell 21 is in thermal conduction connection with the thermally conductive member 40 through the first surface 2111.

As shown in FIGs. 9, 12, 13, and 20, in some embodiments of this application, the thermally conductive member 40 is disposed in the first direction and intersects with the horizontal plane, and the battery cell 21 is in thermal conduction connection with the thermally conductive member 40 through the first surface 2111.

As shown in FIGs. 9, 18, 19, and 20, in some embodiments of this application, the thermally conductive member 40 is disposed in the first direction and intersects with the horizontal plane, and the battery cell 21 is in thermal conduction connection with the thermally conductive member 40 through the first surface 2111.

The thermally conductive member 40 is disposed in the first direction, so that any battery cell 21 in the battery module 20 can be subjected to heat exchange by the thermally conductive member 40. In addition, when the electric device 1 experiences collision in the lateral direction, an impact force does not directly act on an end of the thermally conductive member 40. The battery cell 21 is in thermal conduction connection with the thermally conductive member 40 through the first surface 2111, which can ensure a contact area between the thermally conductive member 40 and the battery cell 21 to the greatest extent, thereby ensuring a heat exchange effect on the battery cell 21 by the thermally conductive member 40.

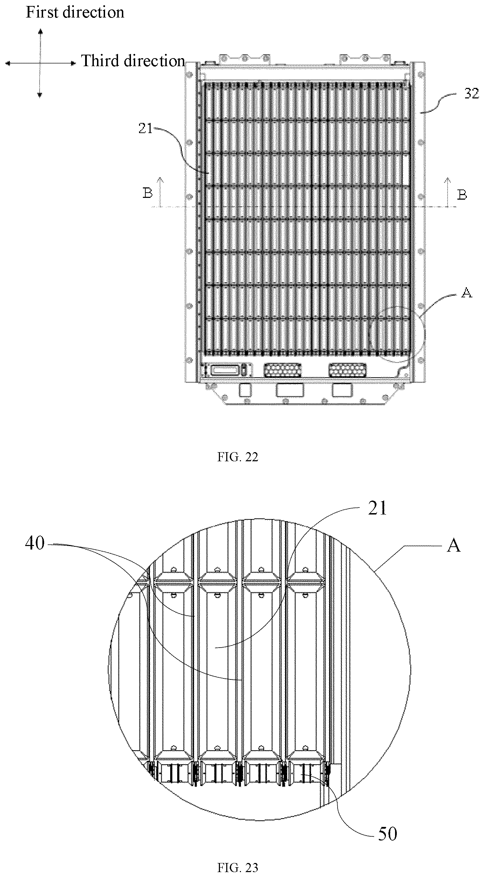

FIG. 21 is a schematic structural diagram of a second portion 32 according to an embodiment of this application. FIG. 22 is a schematic structural assembly diagram of a second portion 32 and a battery module 20 according to an embodiment of this application. FIG. 23 is a schematic diagram of an enlarged structure of part A according to an embodiment of this application. As shown in FIGs. 4, 10, 21, 22, and 23, in some embodiments of this application, the battery 10 includes at least two battery modules 20, where in a third direction, two sides of the thermally conductive member 40 are respectively in thermal conduction connection with two of the battery modules 20, and the third direction intersects with both the first direction and the first surface 2111.

Specifically, the thermally conductive member 40 is disposed between two battery modules 20 and is in thermal conduction connection with the two battery modules 20. The third direction is a width direction of the battery 10 or a lateral direction of the moving direction of the electric device 1. The two sides of the thermally conductive member 40 are in thermal conduction connection with the first surfaces 2111 of the battery cells 21, thereby improving the heat exchange effect on the battery cells 21 by the thermally conductive member 40.

As shown in FIGs. 12, 13, 21, 22, and 23, in some embodiments of this application, the battery 10 includes at least two battery modules 20, where in a third direction, two sides of the thermally conductive member 40 are respectively in thermal conduction connection with two of the battery modules 20, and the third direction intersects with both the first direction and the first surface 2111.

As shown in FIGs. 1 and 22, in some embodiments of this application, the length direction of the battery 10 is parallel to or intersects with the moving direction of the electric device 1.

Specifically, in some embodiments of this application, the length direction of the battery 10 may be set to be parallel to the moving direction of the electric device 1, so that when the thermally conductive member 40 is disposed in the length direction of the battery 10, the two ends of the thermally conductive member 40 are respectively disposed at two ends of the battery 10 in the length direction, that is, respectively disposed at two ends of the electric device 1 in the moving direction. In this way, when the electric device 1 experiences collision in a lateral direction, an impact force does not directly act on the end of the thermally conductive member 40, thereby avoiding the damage to the thermally conductive member 40 and ensuring the safety and reliability of the battery 10 in use.

In some embodiments of this application, the length direction of the battery 10 may alternatively be arranged at an included angle with the moving direction of the electric device 1, and the battery 10 can also supply power to the electric device 1, thereby facilitating arrangement of a position of the battery 10.

As shown in FIGs. 20 to 23, in some embodiments of this application, a heat exchange medium channel is provided in the thermally conductive member 40.

The heat exchange medium channel is used for circulation of a heat exchange medium, so that the flowing heat exchange medium can take away heat dissipated from the battery cell 21 or heat up the battery cell 21, thereby improving the heat exchange efficiency for the battery cell 21. The heat exchange medium may be heat exchange fluid, specifically oil or water-based fluid.

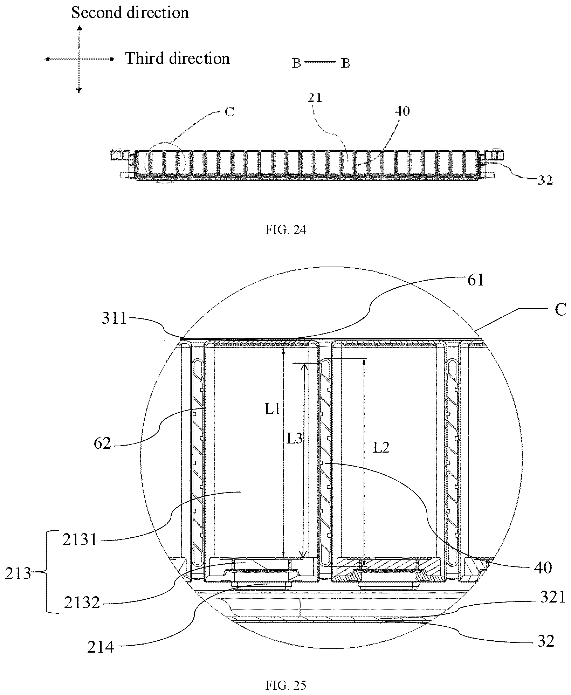

FIG. 24 is a schematic structural cross-sectional view along B-B according to an embodiment of this application. FIG. 25 is a schematic diagram of an enlarged structure of part C according to an embodiment of this application. As shown in FIGs. 4, 10, 23, 23, 24, and 25, in some embodiments of this application, the battery 10 includes a plurality of thermally conductive members 40, where the plurality of thermally conductive members 40 are arranged along a third direction, the third direction intersecting with both the first direction and the first surface 2111.

As shown in FIGs. 12, 13, 22, 23, 24, and 25, in some embodiments of this application, the battery 10 includes a plurality of thermally conductive members 40, where the plurality of thermally conductive members 40 are arranged along a third direction, the third direction intersecting with both the first direction and the first surface 2111.

As shown in FIGs. 18, 19, 22, 23, 24, and 25, in some embodiments of this application, the battery 10 includes a plurality of thermally conductive members 40, where the plurality of thermally conductive members 40 are arranged along a third direction, the third direction intersecting with both the first direction and the first surface 2111.

Specifically, the first direction is the length direction of the battery 10, and the third direction is the width direction of the battery 10. The plurality of thermally conductive members 40 are arranged along the third direction. The plurality of thermally conductive members 40 are each in thermal conduction connection with the first surface 2111 of the battery cell 21 and jointly configured to dissipate heat of the battery 10, effectively increasing the heat exchange speed of the battery 10.

As shown in FIGs. 4, 10, 22, 23, 24, and 25, in some embodiments of this application, in the third direction, two sides of the battery module 20 are each provided with the thermally conductive member 40, and the battery module 20 is in thermal conduction connection with the thermally conductive members 40 on the two sides.

As shown in FIGs. 12, 13, 22, 23, 24, and 25, in some embodiments of this application, in the third direction, two sides of the battery module 20 are each provided with the thermally conductive member 40, and the battery module 20 is in thermal conduction connection with the thermally conductive members 40 on the two sides.

As shown in FIGs. 14, 15, 22, 23, 24, and 25, in some embodiments of this application, in the third direction, two sides of the battery module 20 are each provided with the thermally conductive member 40, and the battery module 20 is in thermal conduction connection with the thermally conductive members 40 on the two sides.

As shown in FIGs. 18, 19, 22, 23, 24, and 25, in some embodiments of this application, in the third direction, two sides of the battery module 20 are each provided with the thermally conductive member 40, and the battery module 20 is in thermal conduction connection with the thermally conductive members 40 on the two sides.

The two sides of the battery module 20 are in thermal conduction connection with the thermally conductive members 40, so that the two sides of the battery module 20 are both subjected to heat dissipation, thereby effectively increasing the heat exchange speed of the battery 1.

As shown in FIGs. 4, 10, 22, 23, 24, and 25, in some embodiments of this application, in the third direction, the battery cell 21 includes two first surfaces 2111 opposite each other, and the two first surfaces 2111 of the battery cell 21 are each in thermal conduction connection with one thermally conductive member 40.

As shown in FIGs. 14, 15, 22, 23, 24, and 25, in some embodiments of this application, in the third direction, the battery cell 21 includes two first surfaces 2111 opposite each other, and the two first surfaces 2111 of the battery cell 21 are each in thermal conduction connection with one thermally conductive member 40.

When the battery cell 21 has two first surfaces 2111 with the largest area, the two first surfaces 2111 are both subjected to heat dissipation, effectively increasing the heat exchange speed of the battery 10.

As shown in FIGs. 4, 5, 10, 24, and 25, in some embodiments of this application, the battery cell 21 includes an electrode assembly 213, where the electrode assembly 213 includes a body portion 2131 and a tab 2132 protruding from the body portion 2131, and the tab 2132 is electrically connected to an electrode terminal 214; and in a third direction, projections of the thermally conductive member 40 and the body portion 2131 at least partially overlap, and the third direction intersects with both the first direction and the first surface 2111.

Specifically, the thermally conductive member 40 extends along the first direction and is disposed on a side of the battery cell 21 in the third direction. The first direction is a length direction of the battery cell 21, and the third direction is a width direction of the battery cell 21.

As shown in FIGs. 12, 13, 24, and 25, in some embodiments of this application, the battery cell 21 includes an electrode assembly 213, where the electrode assembly 213 includes a body portion 2131 and a tab 2132 protruding from the body portion 2131, and the tab 2132 is electrically connected to an electrode terminal 214; and in a third direction, projections of the thermally conductive member 40 and the body portion 2131 at least partially overlap, and the third direction intersects with both the first direction and the first surface 2111.

Specifically, the thermally conductive member 40 extends along the first direction and is disposed on a side of the battery cell 21 in the third direction. The first direction is the moving direction of the electric device 1, and the third direction is a radial direction of the battery cell 21.

As shown in FIGs. 14, 15, 22, 23, 24, and 25, in some embodiments of this application, the battery cell 21 includes an electrode assembly 213, where the electrode assembly 213 includes a body portion 2131 and a tab 2132 protruding from the body portion 2131, and the tab 2132 is electrically connected to an electrode terminal 214; and in a third direction, projections of the thermally conductive member 40 and the body portion 2131 at least partially overlap, and the third direction intersects with both the first direction and the first surface 2111.

Specifically, the thermally conductive member 40 extends along the first direction and is disposed on a side of the battery cell 21 in the third direction. The first direction is a length direction of the battery cell 21, and the third direction is a width direction of the battery cell 21.

As shown in FIGs. 18, 19, 24, and 25, in some embodiments of this application, the battery cell 21 includes an electrode assembly 213, where the electrode assembly 213 includes a body portion 2131 and a tab 2132 protruding from the body portion 2131, and the tab 2132 is electrically connected to an electrode terminal 214; and in a third direction, projections of the thermally conductive member 40 and the body portion 2131 at least partially overlap, and the third direction intersects with both the first direction and the first surface 2111.

Specifically, the thermally conductive member 40 extends along the first direction and is disposed on a side of the battery cell 21 in the third direction. The first direction is the moving direction of the electric device 1, and the third direction is a lateral direction of the electric device 1.

The thermally conductive member 40 and the body portion at least partially overlapping in the second direction can implement effective heat exchange for the body portion through the thermally conductive member 40, thereby ensuring the heat exchange effect on the battery 10.

As shown in FIGs. 4, 5, 10, 24, and 25, in some embodiments of this application, in a second direction, a size of the body portion 2131 is L1, and a size of the thermally conductive member 40 is L2, where 0.5≤L2/L1≤1.5, and the first direction, the second direction, and the third direction intersect with each other.

Specifically, the first direction is a length direction of the battery cell 21, and the second direction is a height direction of the battery cell 21.

As shown in FIGs. 12, 13, 24, and 25, in some embodiments of this application, in a second direction, a size of the body portion 2131 is L1, and a size of the thermally conductive member 40 is L2, where 0.5≤L2/L1≤1.5, and the first direction, the second direction, and the third direction intersect with each other.

Specifically, the first direction is the moving direction of the electric device 1, and the second direction is a height direction of the battery cell 21.

As shown in FIGs. 14, 15, 22, 23, 24, and 25, in some embodiments of this application, in a second direction, a size of the body portion 2131 is L1, and a size of the thermally conductive member 40 is L2, where 0.5≤L2/L1≤1.5, and the first direction, the second direction, and the third direction intersect with each other.

Specifically, the first direction is a length direction of the battery cell 21, and the second direction is a height direction of the battery cell 21.

As shown in FIGs. 18, 19, 24, and 25, in some embodiments of this application, in a second direction, a size of the body portion 2131 is L1, and a size of the thermally conductive member 40 is L2, where 0.5≤L2/L1≤1.5, and the first direction, the second direction, and the third direction intersect with each other.

Specifically, the first direction is a length direction of the battery cell 21, and the second direction is a height direction of the battery cell 21.

The value range of L2/L1 is set to be greater than 0.5 and less than 1.5, which ensures that the thermally conductive member 40 has a sufficient thermal conduction area for performing heat exchange with the body portion 2131, thereby significantly enhancing the heat exchange effect on the body portion 2131 by the thermally conductive member 40.

It should be understood that when L2/L1 is less than 0.5, the size of the thermally conductive member 40 is excessively small, which cannot implement effective heat exchange for the battery cell 21; and when L2/L1 is greater than 1.5, the thermally conductive member 40 has a relatively large size and is prone to occupying space of the battery 10, which is not conducive to improving space utilization of the battery 10.

It should be noted that in some embodiments of this application, the value of L2/L1 may be 0.5, 0.6, 0.7, 0.8, 0.9, 1.0, 1.1, 1.2, 1.3, 1.4, ..., or 1.5.

As shown in FIGs. 4, 5, 10, 24, and 25, in some embodiments of this application, in the second direction, size of an overlapping region is L3, where 0.5≤L3/L1≤1.

Setting of the size of the overlapping region in the second direction allows for proper setting of a heat exchange area between the thermally conductive member 40 and the body portion 2131, thereby significantly enhancing the heat exchange effect on the body portion 2131 by the thermally conductive member 40.

It should be understood that when L3/L1 is less than 0.5, an overlapping area between the thermally conductive member 40 and the body portion 2131 is excessively small, which leads to degradation of the heat exchange effect on the battery cell 21 by the thermally conductive member 40 and cannot effectively ensure heat dissipation of the battery cell 21.

It should be noted that in some embodiments of this application, the value of L3/L1 may be 0.5, 0.6, 0.7, 0.8, 0.9, ..., or 1.

As shown in FIGs. 22 and 23, in some embodiments of this application, the battery 10 further includes a fluid collecting member 50, where the fluid collecting member 50 is in fluid communication with a plurality of thermally conductive members 40.

One end of the thermally conductive member 40 in the first direction is provided with the fluid collecting member 50, or two ends of the thermally conductive member 40 in the first direction are each provided with the fluid collecting member 50. The fluid collecting member 50 is configured to supply or recycle the heat exchange medium in the heat exchange medium channel, so as to exchange heat with the battery 10.

Specifically, because the plurality of thermally conductive members 40 are disposed along the length direction of the battery 10 or the moving direction of the electric device 1, to facilitate fluid communication with the plurality of thermally conductive members 40 through the fluid collecting member 50, the fluid collecting member 50 is disposed at one end of the battery 10 in the length direction or an end of the electric device 1 in the moving direction, and the fluid collecting member 50 is disposed at one end or two ends based on actual needs.

The fluid collecting member 50 is disposed at the end of the thermally conductive member 40 in the first direction, so that when the electric device 1 experiences collision in the lateral direction, an impact force does not directly act on the fluid collecting member 50 at the end of the electric device 1 in the moving direction, thereby avoiding the damage to the fluid collecting member 50 and ensuring the safety and reliability of the battery 10 in use.

As shown in FIGs. 22 and 23, in some embodiments of this application, two fluid collecting member 50 are provided, where the two fluid collecting members 50 are disposed at one end of the thermally conductive member 40 in the first direction, the two fluid collecting members 50 are arranged along a second direction, and the second direction intersects with both the first direction and the horizontal plane.

Specifically, in some embodiments of this application, the second direction may be the vertical direction, that is, the two fluid collecting members 50 are apart from each other along the vertical direction. The two fluid collecting members 50 may be an inlet fluid collecting member and an outlet fluid collecting member respectively.

The two fluid collecting members 50 being jointly disposed at one end in the first direction and arranged along the second direction can effectively reduce space in the battery 10 occupied by the fluid collecting members 50 in the first direction, thereby facilitating arrangement of other structures in the battery 10 and increasing the energy density of the battery. The two fluid collecting members being jointly disposed at one end in the first direction can also reduce the probability of the fluid collecting member being damaged due to the collision in the first direction.

As shown in FIGs. 4 and 10, in some embodiments of this application, the battery cell 21 includes an electrode terminal 214, where at least one electrode terminal 214 is provided; and the pressure relief mechanism 215 and the at least one electrode terminal 214 are disposed on one second surface 2121, or the pressure relief mechanism 215 and the electrode terminal 214 are respectively disposed on the two second surfaces 215.

Specifically, as shown in FIGs. 4 and 10, the pressure relief mechanism 215 and two electrode terminals 214 are jointly disposed on one second surface 2121 in a second direction, where the second direction is the vertical direction. In some embodiments of this application, the pressure relief mechanism 215 is disposed on one second surface 2121 in the second direction, and the two electrode terminals 214 are both disposed on the other second surface 2121 in the second direction; or the two electrode terminals 214 are respectively disposed on the two second surfaces 2121 in the second direction, and the pressure relief mechanism 215 and one of the electrode terminals 214 are jointly disposed on one of the second surfaces 2121.

As shown in FIGs. 12 and 13, an electrode terminal 214 protrudes from one of the second surfaces 2121, and the pressure relief mechanism 215 and the protruding electrode terminal 214 are jointly disposed on the second surface 2121; or an electrode terminal 214 protrudes from one of the second surfaces 2121, and the pressure relief mechanism 215 is disposed on the other second surface 2121 with no protruding electrode terminal 214.

As shown in FIGs. 14 and 15, the two electrode terminals 214 are respectively disposed on the two second surfaces 2121 in the first direction, and the pressure relief mechanism 215 and one of the electrode terminals 214 are jointly disposed on one of the second surfaces, where the first direction is the length direction of the battery 10 or the moving direction of the electric device 1. Alternatively, the pressure relief mechanism 215 is disposed on one second surface 2121 in the first direction, and the two electrode terminals 214 are jointly disposed on the other second surface 2121 in the first direction; or the two electrode terminals 214 and the pressure relief mechanism 215 are jointly disposed on one of the second surfaces 2121.

The pressure relief mechanism 215 is in communication with the inside of the battery cell 21 and is configured to discharge internal pressure of the battery cell 21 when the internal pressure of the battery cell 21 increases. The pressure relief mechanism 215 and the electrode terminal 214 may be disposed on one second surface 2121 or two second surfaces 2121 respectively as required, so that the pressure relief mechanism 215 avoids the first surface 2111 on which heat exchange with the thermally conductive member 40 occurs, facilitating smooth degassing by the pressure relief mechanism 215 when thermal runaway occurs in the battery cell 21.

As shown in FIGs. 3 and 4, in some embodiments of this application, the electrode terminal 214 includes two electrode terminals 214 having opposite polarities, where the two electrode terminals 214 are disposed on one of the second surfaces 2121, or the two electrode terminals 214 are respectively disposed on the two second surfaces.

Specifically, as shown in FIGs. 3 and 4, the battery cell 21 includes two electrode terminals 214, and the two electrode terminals 214 are jointly disposed on one second surface 2121 in the second direction. The second direction may be the vertical direction. In some embodiments of this application, the two electrode terminals 214 may alternatively be respectively disposed on the two second surfaces 2121.

As shown in FIGs. 4 and 10, the battery cell 21 includes two electrode terminals 214, and the two electrode terminals 214 are jointly disposed on one second surface 2121 in the second direction. The second direction may be the vertical direction. In some embodiments of this application, the two electrode terminals 214 may alternatively be respectively disposed on the two second surfaces 2121.

As shown in FIGs. 4 and 11, the battery cell 21 includes two electrode terminals 214, and the two electrode terminals 214 are jointly disposed on one second surface 2121 in the first direction. The first direction is the length direction of the battery 10 or the moving direction of the electric device 1. In some embodiments of this application, the two electrode terminals 214 may alternatively be respectively disposed on the two second surfaces 2121.

As shown in FIGs. 12 and 13, the battery cell 21 includes two electrode terminals 214, and the two electrode terminals 214 are respectively disposed on the two second surfaces 2121 in the second direction, where one of the electrode terminals 214 is flush with an end surface of the battery cell 21, and the end of the battery cell 21 is the electrode terminal 214. The second direction is the vertical direction.

As shown in FIGs. 14 and 15, the battery cell 21 includes two electrode terminals 214, and the two electrode terminals 214 are respectively disposed on the two second surfaces 2121 in the first direction. The first direction is the length direction of the battery 10 or the moving direction of the electric device 1. Alternatively, the two electrode terminals 214 may be respectively disposed on the two second surfaces 2121.

As shown in FIGs. 15 and 17, the battery cell 21 includes two electrode terminals 214, and the two electrode terminals 214 are respectively disposed on the two second surfaces 2121 in the first direction. The first direction is the length direction of the battery 10 or the moving direction of the electric device 1. Alternatively, the two electrode terminals 214 may be respectively disposed on the two second surfaces 2121.

The two electrode terminals 214 having opposite polarities are disposed on one second surface 2121 or two second surfaces 2121 respectively of the battery cell 21 as required, so that the electrode terminals 214 avoid the first surface 2111 on which heat exchange with the thermally conductive member 40 occurs, facilitating subsequent electrical connection with another adjacent battery cell 21.

As shown in FIGs. 1, 18, and 19, in some embodiments of this application, the electrode terminal 214 is disposed on the first surface 2111.

Specifically, the battery cell 21 includes two electrode terminals 214, and the two electrode terminals 214 are jointly disposed on the first surface 2111. The length direction of the battery cell 21 is arranged in the first direction. The battery cell 21 includes two first surfaces 2111 opposite each other in the third direction, and the two electrode terminals 214 are jointly disposed on one of the first surfaces 2111. The first direction is the horizontal direction.

The electrode terminal 214 being disposed on the first surface 2111 can reduce space in the battery 10 occupied in the second direction, thereby increasing the energy density of the battery 10.

As shown in FIGs. 18 and 19, in some embodiments of this application, the battery cell 21 includes the first surface 2111 and a fourth surface opposite the first surface 2111, where the first surface 2111 and the fourth surface are opposite each other in the third direction, the third direction intersecting with both the first direction and the first surface 2111, a concave portion is provided at an edge of the fourth surface, the first surface 2111 is used for arranging the electrode terminal 214, and the electrode terminal 214 protrudes from the first surface 2111 in the third direction and corresponds to the concave portion.

Specifically, as shown in FIGs. 1, 18, and 19, the length direction of the battery cell 21 is arranged in the first direction. The battery cell 21 includes the first surface 2111 and a fourth surface opposite each other in the third direction, a concave portion is provided at an edge of the fourth surface, and the first surface 2111 is used for arranging the electrode terminal 214.

The electrode terminal 214 is disposed on the first surface 2111, and the concave portion corresponding to the electrode terminal 2111 is provided at the edge of the fourth surface, so that the electrode terminal 214 of an adjacent battery cell 21 is accommodated in the concave portion, and an operation space for electrical connection is left, allowing the battery 10 to have a more compact overall structure and high space utilization.

As shown in FIGs. 1, 6, and 10, in some embodiments of this application, the plurality of surfaces further include two third surfaces 2112 opposite each other in the first direction, and the first direction, the second direction, and the third direction intersect with each other; and the electrode terminal 214 includes two electrode terminals 214 having opposite polarities, where the two electrode terminals 214 are respectively disposed on the two third surfaces 2112. In some embodiments of this application, the two electrode terminals 214 may alternatively be jointly disposed on one third surface 2112.

As shown in FIGs. 1, 14, and 16, in some embodiments of this application, the plurality of surfaces further include two third surfaces 2112 opposite each other in the second direction, and the first direction, the second direction, and the third direction intersect with each other; and the electrode terminal 214 includes two electrode terminals 214 having opposite polarities, where the two electrode terminals 214 are respectively disposed on the two third surfaces 2112. In some embodiments of this application, the two electrode terminals 214 may alternatively be jointly disposed on one third surface 2112.

The electrode terminals 214 having opposite polarities are disposed on one third surface 2112 or two third surfaces 2112 respectively of the battery cell 21 as required, facilitating installation of the battery cell 21.

As shown in FIGs. 4, 5, and 10, in some embodiments of this application, the battery cell 21 includes an electrode assembly 213, where the electrode assembly 213 is a flat wound structure, and an outer surface of the electrode assembly 213 includes two flat surfaces, the two flat surfaces facing each other in a third direction; or the electrode assembly 213 is a laminated structure, and a first electrode plate, separator, and second electrode plate of the electrode assembly 213 are stacked along a third direction; where the third direction intersects with both the first direction and the first surface.

No matter the electrode assembly 213 is arranged as a laminated structure or wound structure, the electrode assembly 213 can effectively supply power to the electric device 1.

As shown in FIGs. 3, 4, and 9, in some embodiments of this application, the battery module 20 includes at least two battery cells 21, where the at least two battery cells 21 are arranged along the first direction.

As shown in FIGs. 4, 9, and 10, in some embodiments of this application, the battery module 20 includes at least two battery cells 21, where the at least two battery cells 21 are arranged along the first direction.

As shown in FIGs. 4, 9, and 11, in some embodiments of this application, the battery module 20 includes at least two battery cells 21, where the at least two battery cells 21 are arranged along the first direction. It should be noted that only one battery cell 21 is shown in the first direction in FIG. 11.

As shown in FIGs. 9, 12, and 13, in some embodiments of this application, the battery module 20 includes at least two battery cells 21, where the at least two battery cells 21 are arranged along the first direction.

As shown in FIGs. 9, 14, and 15, in some embodiments of this application, the battery module 20 includes at least two battery cells 21, where the at least two battery cells 21 are arranged along the first direction. It should be noted that only one battery cell 21 is shown in the first direction in FIG. 14.

As shown in FIGs. 9, 15, and 17, in some embodiments of this application, the battery module 20 includes at least two battery cells 21, where the at least two battery cells 21 are arranged along the first direction. It should be noted that only one battery cell 21 is shown in the first direction in FIG. 17.

As shown in FIGs. 9, 18, and 19, in some embodiments of this application, the battery module 20 includes at least two battery cells 21, where the at least two battery cells 21 are arranged along the first direction. It should be noted that only one battery cell 21 is shown in the first direction in FIG. 18.

As shown in FIGs. 4, 10, 12, 13, 18, and 19, in some embodiments of this application, in the first direction, a maximum size of the battery cell 21 is L, and in the second direction, a maximum size of the battery cell 21 is H, where a value range of L/H is 0.5-6.

When the battery cell 21 is as shown in FIG. 4 or FIG. 19, a maximum value of the size ratio L/H is 6. When the battery cell 21 is as shown in FIG. 13, a minimum value of the size ratio L/H is 0.5.

The value of the size ratio L/H being greater than 6 leads to an excessively large size of the battery cell 21 in the first direction, causing inconvenience in installation and reducing the support strength of the battery cell 21. The value of the size ratio L/H being less than 0.5 leads to an excessively large size of the battery cell 21 in the second direction, causing inconvenience in installation and reducing the support strength of the battery cell 21.

It should be noted that the value of L/H may be 0.5, 1, 1.5, 2, 2.5, 3, 3.5, 4, ..., 5, 5.5, ..., or 6. Setting different values of L/H allows the battery cell 21 to have different shapes, thereby meeting the requirements of different types of batteries 10.

The maximum size H of the battery cell 21 includes both the size of the housing 211 and the size of an electrode terminal 214 protruding from the housing 211. The battery cell 21 being set according to the above size ratio can not only increase the power of the battery cell 21 to the greatest extent on the basis of ensuring the support strength of the battery cell 21, but also facilitate installation of the battery cell 21.

As shown in FIGs. 4, 10, 12, 13, 18, and 19, in some embodiments of this application, in the third direction, a maximum size of the battery cell 21 is D, where a value range of L/D is 1-30; and the first direction, the second direction, and the third direction intersect with each other.

The value of the size ratio L/D being greater than 30 leads to an excessively large size of the battery cell 21 in the first direction, causing inconvenience in installation and reducing the support strength of the battery cell 21. The value of the size ratio L/D being less than 1 leads to an excessively small size of the battery cell 21 in the first direction, reducing the power of the battery cell 21.

It should be noted that the value of L/D may be 1, 2, 3, 4, 5, 6, 7, 8, ..., 10, ..., 15, ..., 20, ..., 25, ..., 28, ..., or 30. Setting different values of L/D allows the battery cell 21 to have different shapes, thereby meeting the requirements of different types of batteries 10.

When the battery cell 21 is as shown in FIG. 4 or FIG. 17, a maximum value of the size ratio L/D is 30. When the battery cell 21 is as shown in FIG. 11, a minimum value of the size ratio L/D is 1. The battery cell 21 being set according to the above size ratio can increase the power of the battery cell 21 to the greatest extent on the basis of ensuring the support strength of the battery cell 21.

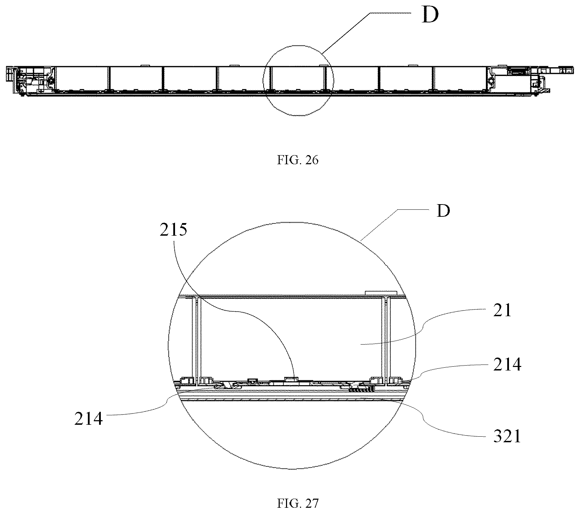

FIG. 26 is a schematic diagram of an internal structure of a second portion 32 according to an embodiment of this application. FIG. 27 is a schematic diagram of an enlarged structure of part D according to an embodiment of this application. As shown in FIGs. 4, 10, 24, 25, 26, and 27, in some embodiments of this application, the battery 10 further includes a baffle 321, where the baffle 321 is disposed opposite the second surface 2121, of the battery cell 21, provided with the electrode terminal 214 in the second direction, a distance between the electrode terminal 214 and the baffle 321 is 1.2 mm-25 mm, and the second direction intersects with both the first direction and the horizontal plane.

Specifically, the baffle 321 may be a portion of the structure of the box 30 itself, or the baffle 321 is connected to the box 30 and disposed in the box 30. The second direction may be the vertical direction.

As shown in FIGs. 12, 13, 24, 25, 26, and 27, in some embodiments of this application, the battery 21 further includes a baffle 321, where the baffle 321 is disposed opposite the second surface 2121, of the battery cell 21, provided with the protruding electrode terminal 214 in the second direction, a distance between the electrode terminal 214 and the baffle 321 is 1.2 mm-25 mm, and the second direction intersects with both the first direction and the horizontal plane.

The distance between the electrode terminal 214 and the baffle 321 being less than 1.2 mm causes the electrode terminal 214 to be likely to collide with the baffle, thus leading to the damage to the electrode terminal 214. The distance between the electrode terminal 214 and the baffle 321 being greater than 25 mm leads to an excessively large size of the battery 10, causing inconvenience in installation and arrangement of the battery 10.

Setting the distance between the baffle 321 and the electrode terminal 214 to be 1.2 mm-25 mm can prevent the baffle 321 from colliding with the electrode terminal 214 when the battery 10 experiences collision in the second direction, which otherwise leads to the damage to the electrode terminal 214.

It should be noted that the distance between the baffle 321 and the electrode terminal 214 may be 1.2 mm, 1.5 mm, 1.8 mm, 2 mm, 3 mm, 4 mm, 5 mm, 6 mm, 7 mm, 8 mm, ..., 10 mm, ..., 15 mm, ..., 20 mm, ..., 23 mm, 24 mm, or 25 mm.

As shown in FIGs. 1, 4, 10, 24, 25, 26, and 27, in some embodiments of this application, at least one electrode terminal 214 is located under the battery cell 21, and the baffle 321 is located under the electrode terminal 214; or at least one electrode terminal 214 is located above the battery cell 21, and the baffle 321 is located above the electrode terminal 214.

Specifically, the electrode terminal 214 and the baffle 321 are jointly disposed in the second direction, and the baffle 321 is located under the battery cell 21, that is, the baffle 321 is disposed closer to the second portion 32 than the electrode terminal 214. The second direction may be the vertical direction. Two electrode terminals 214 may be jointly disposed under the battery cell 21, or one is disposed under the battery cell 21 and the other is disposed above the battery cell 21. Alternatively, the electrode terminal 214 and the baffle 321 are jointly disposed in the second direction, and the baffle 321 is located above the battery cell 21, that is, the baffle 321 is disposed closer to the first portion 31 than the electrode terminal 214. Two electrode terminals 214 may be jointly disposed above the battery cell 21, or one is disposed under the battery cell 21 and the other is disposed above the battery cell 1.

As shown in FIGs. 1, 12, 13, 24, 25, 26, and 27, in some embodiments of this application, the protruding electrode terminal 214 is located under the battery cell 21, and the baffle 321 is located under the electrode terminal 214; or the protruding electrode terminal 214 is located above the battery cell 21, and the baffle 321 is located above the electrode terminal 214.

The baffle 321 is disposed under the electrode terminal 214 in the second direction or above the electrode terminal 214 in the second direction, facilitating proper arrangement based on actual installation positions.

As shown in FIGs. 4, 9, 10, 24, and 25, in some embodiments of this application, the electrode terminal 214 and the pressure relief mechanism 215 are disposed on one second surface 2121; the battery 10 includes a support plate 311, where the battery cell 21 is fixedly connected to the support plate 311 through the other second surface 2121 provided with no electrode terminal 214; and the second direction intersects with both the first direction and the horizontal plane.

Specifically, the support plate 311 may be a portion of the structure of the box 30 itself, or the support plate 311 is connected to the box 30 and disposed in the box 30. The support plate 311 may be disposed at the first portion 31 or the second portion 32.

As shown in FIGs. 4, 10, 24, and 25, two electrode terminals 214 may be jointly disposed on one of the second surfaces 2121 of the battery cell 21 in the second direction, and the other second surface 2121 provided with no electrode terminal 214 is fixedly connected to the support plate 311, so that the battery cell 21 is fixedly disposed in the box 30.

As shown in FIGs. 12, 13, 24, and 25, an electrode terminal 214 protrudes from one of the second surfaces 2121, and the other second surface 2121 provided with no protruding electrode terminal 214 is fixedly connected to the support plate 311.

The battery cell 21 is fixed in the box 30 via the support plate 311, facilitating installation and fixing of the battery cell 21.

As shown in FIGs. 4, 10, 24, and 25, in some embodiments of this application, the other second surface 2121 is fixedly connected to the support plate 311 through a first adhesion layer 61, and the thermally conductive member 40 is in thermal conduction connection with the first surface 2111 through a second adhesion layer 62, where a thermal conductivity coefficient of the first adhesion layer 61 is less than or equal to a thermal conductivity coefficient of the second adhesion layer 62.

Specifically, the surface provided with no electrode terminal 214 is fixedly connected to the support plate 311 through the first adhesion layer 61.

As shown in FIGs. 12, 13, 24, and 25, in some embodiments of this application, the second surface 2121 provided with no protruding electrode terminal 214 is fixedly connected to the support plate 311 through the first adhesion layer 61, and the thermally conductive member 40 is in thermal conduction connection with the first surface 2111 through the second adhesion layer 62. The first adhesion layer 61 and the second adhesion layer 62 may both be thermally conductive polyurethane adhesive layers, and different amounts of thermally conductive particles are added to achieve different thermal conductivity coefficients.

Because the first adhesion layer 61 is used to connect the second surface 2121 and the support plate 311, and the second adhesion layer 62 is used for thermal conduction connection between the first surface 2111 and the thermally conductive member 40, the thermal conductivity coefficient of the first adhesion layer 61 is set to be less than or equal to the thermal conductivity coefficient of the second adhesion layer 62, thereby ensuring more effective heat exchange for the battery cell 21 through the thermally conductive member 40.

As shown in FIGs. 24 and 25, in some embodiments of this application, a value range of a ratio of the thermal conductivity coefficient of the first adhesion layer 61 to the thermal conductivity coefficient of the second adhesion layer 62 is 0.1-1.

Specifically, such setting according to the above ratio can allow for effective heat exchange for the battery cell 21 through the thermally conductive member 40.

It should be understood that when the value of the ratio of the thermal conductivity coefficient of the first adhesion layer 61 to the thermal conductivity coefficient of the second adhesion layer 62 is less than 0.1, the first adhesion layer 61 has poor thermal conductivity, so the support plate 311 connected to the first adhesion layer 61 cannot perform heat transfer through the side on which the first adhesion layer 61 is located, so that heat exchange for the support plate 311 cannot be implemented. When the value of the ratio of the thermal conductivity coefficient of the first adhesion layer 61 to the thermal conductivity coefficient of the second adhesion layer 62 is greater than 1, the thermal conductivity of the first adhesion layer 61 is better than that of the second adhesion layer 62, and the capability of the thermally conductive member 40 in performing heat exchange for the battery cell 21 is degraded, leading to degradation of the heat exchange effect on the battery cell 21.

It should be noted that the value of the ratio of the thermal conductivity coefficient of the first adhesion layer 61 to the thermal conductivity coefficient of the second adhesion layer 62 may be 0.1, 0.2, 0.3, 0.4, 0.5, 0.6, 0.7, 0.8, 0.9, ..., or 1.

As shown in FIGs. 1 to 27, a second aspect of this application proposes an electric device 1 including the battery 10 according to any one of the foregoing embodiments, where the battery 10 is configured to supply electrical energy so as to drive the electric device 1 to move.

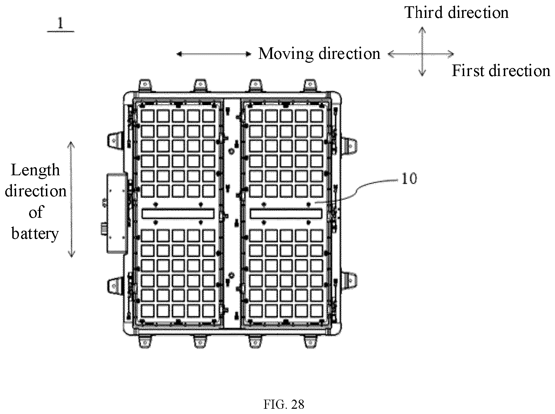

FIG. 28 is a schematic diagram of a distribution structure of a battery 10 in an electric device 1 according to an embodiment of this application. As shown in FIGs. 1 to 28, in some embodiments of this application, in a case that the length direction of the battery 10 is different from the moving direction of the electric device 1, the first direction is the moving direction of the electric device 1.

In some embodiments, the length direction of the battery 10 may be perpendicular to the moving direction of the electric device 1. For example, one or more batteries 10 may be arranged along the moving direction of the electric device 1. When a plurality of batteries 10 are arranged, the length direction of at least one battery 10 is perpendicular to the moving direction of the electric device 1. In these embodiments, the first direction is the moving direction of the electric device 1, that is, in the battery 10 with the length direction perpendicular to the moving direction of the electric device 1, the battery module 20 and the thermally conductive member 40 are arranged along the width direction of the battery 10, consistent with the moving direction of the electric device 1.

The electric device 1 of this application may be a mobile phone, a portable device, a notebook computer, an electric bicycle, an electric toy, an electric tool, an electric vehicle, a ship, and a spacecraft. For example, the spacecraft includes an airplane, a rocket, a space shuttle, and a spaceship.

With the first direction set as the moving direction of the electric device 1, when the pressure relief mechanism 215 is disposed on the second surface 2121, because the two second surfaces 2121 are opposite each other in the second direction, and the second direction intersects with the first direction, that is, the pressure relief mechanism 215 is not disposed at an end of the electric device 1 in the moving direction, so that when the electric device 1 experiences collision in the moving direction, the pressure relief mechanism 215 does not experience collision, thereby avoiding the damage to the pressure relief mechanism 215 and ensuring the normal use of the pressure relief mechanism 215. When the pressure relief mechanism 215 is disposed on the first surface 2111, because the first surface 2111 is the surface with the largest area, the pressure relief mechanism 215 occupies a small portion of the first surface 2111, so that when the electric device 1 experiences collision, the pressure relief mechanism 215 is not prone to collision, thereby avoiding the damage to the pressure relief mechanism 215 and ensuring the normal use of the pressure relief mechanism 215.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

As shown in FIGs. 1, 4, 5, 9, 10, and 20 to 27, in an embodiment of this application, the electric device 1 includes a battery 10, where the battery 10 is configured to supply electrical energy so as to drive the electric device 1 to move. The battery 10 includes a box 30 and a plurality of battery modules 20 disposed in the box 30, where the box 30 includes a first portion 31 and a second portion 32, and the first portion 31 and the second portion 32 enclose a space for accommodating the battery modules 20. The plurality of battery modules 20 are disposed along a first direction and arranged along a third direction. The battery module 20 includes a plurality of battery cells 21, where a length direction of the battery cell 21 is arranged in the first direction, a height direction of the battery cell 21 is arranged in a second direction, and a width direction of the battery cell 21 is arranged in the third direction. The battery cell 21 includes two third surfaces 2112 opposite each other in the first direction, two second surfaces 2121 opposite each other in the second direction, and two first surfaces 2111 opposite each other in the third direction, where the first surface 2111 is the surface with the largest area in the battery cell 21. The first direction is a moving direction of the electric device 1. A length direction of the battery 10 is parallel to the moving direction of the electric device 1. The second direction is the vertical direction. The third direction is a lateral direction of the moving direction of the electric device 1.

The battery cell 21 includes an electrode assembly 213, where the electrode assembly 213 includes a body portion 2131 and a tab 2132 protruding from the body portion 2131, and the tab 2132 is electrically connected to an electrode terminal 214; and in the third direction, projections of a thermally conductive member 40 and the body portion 2131 at least partially overlap and have an overlapping region. In the second direction, a size of the body portion 2131 is L1, a size of the thermally conductive member 40 is L2, and a size of the overlapping region is L3, where 0.5≤L2/L1≤1.5, and 0.5≤L3/L1≤1.

The battery cell 21 includes two electrode terminals 214 having opposite polarities, where the two electrode terminals 214 are disposed on one second surface 2121. The battery cell 21 further includes a pressure relief mechanism 215, where the pressure relief mechanism 215 and the two electrode terminals 214 are disposed on one second surface 2121. In the first direction, a maximum size of the battery cell 21 is L, and in the second direction, a maximum size of the battery cell 21 is H, where a value range of L/H is 0.5-6. In the third direction, a maximum size of the battery cell 21 is D, where a value range of L/D is 1-30. The battery 10 further includes a baffle 321, where the baffle 321 is disposed at the second portion 32. The baffle 321 is disposed opposite the second surface 2121 of the battery cell 21 provided with the electrode terminal 214 in the second direction. The electrode terminal 214 is located under the battery cell 21. The baffle 214 is located under the electrode terminal 214. A distance between the electrode terminal 214 and the baffle 321 is 1.2 mm-25 mm.

The box 30 is further provided with a plurality of thermally conductive members 40 inside, where the thermally conductive member 40 is disposed in the first direction, and the plurality of thermally conductive members 40 are arranged along the third direction. Two sides of the battery module 20 in the third direction are each provided with the thermally conductive member 40, and the first surfaces 2111 on the two sides in the third direction are respectively in thermal conduction connection with the thermally conductive members 40. A heat exchange medium channel is provided in the thermally conductive member 40. The battery 10 further includes a fluid collecting member 50, where the fluid collecting member 50 extends along the third direction and is in fluid communication with the plurality of thermally conductive members 40. Two fluid collecting members 50 are provided, where the two fluid collecting members 50 are jointly disposed at one end of the electric device 1 in the moving direction and are apart from each other in the second direction.

The box 30 is further provided with a support plate 311 inside, where the support plate 311 is disposed on the first portion 31. The battery cell 21 is fixedly connected to the support plate 311 through the second surface 2121 provided with no electrode terminal 214. The second surface 2121 provided with no electrode terminal 214 is fixedly connected to the support plate 311 through a first adhesion layer 61, and the thermally conductive member 40 is in thermal conduction connection with the first surface 2111 through a second adhesion layer 62, where a value range of a ratio of thermal conductivity coefficient of the first adhesion layer 61 to thermal conductivity coefficient of the second adhesion layer 62 is 0.1-1.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, **characterized by** comprising:
a battery module (20), wherein the battery module (20) comprises at least one battery cell (21), and the battery module (20) is disposed in a first direction, the first direction being a length direction of the battery (10) or a moving direction of an electric device (1) with the battery (10), wherein
the battery cell (21) comprises a plurality of surfaces, wherein the plurality of surfaces comprise a first surface (2111) with the largest area, and the plurality of surfaces further comprise two second surfaces (2121) opposite each other, the two second surfaces being both connected to the first surface; and the battery cell (21) further comprises a pressure relief mechanism (215), wherein the pressure relief mechanism (215) is disposed on the first surface or one of the second surfaces (2121).

2. The battery according to claim 1, **characterized in that** the two second surfaces (2121) are opposite each other in a second direction, wherein the second direction intersects with the first direction.

3. The battery according to claim 1, **characterized in that** the two second surfaces (2121) are opposite each other in the first direction.

4. The battery according to claim 1, **characterized in that** the first surface (2111) intersects with the horizontal plane.

5. The battery according to claim 2, **characterized in that** the second direction intersects with or is parallel to the horizontal plane.

6. The battery according to any one of claims 1 to 5, **characterized by** further comprising a thermally conductive member (40), wherein the thermally conductive member (40) is disposed in the first direction; and the battery cell (21) is at least in thermal conduction connection with the thermally conductive member (40) through the first surface (2111).

7. The battery according to claim 6, **characterized by** comprising at least two battery modules (20), wherein in a third direction, two sides of the thermally conductive member (40) are respectively in thermal conduction connection with two of the battery modules (20), and the third direction intersects with both the first direction and the first surface (2111).

8. The battery according to claim 6, **characterized in that** the length direction of the battery (10) is parallel to or intersects with the moving direction of the electric device (1).

9. The battery according to claim 6, **characterized in that** a heat exchange medium channel is provided in the thermally conductive member (40).

10. The battery according to claim 9, **characterized in that** the battery (10) comprises a plurality of thermally conductive members (40), wherein the plurality of thermally conductive members (40) are arranged along a third direction, the third direction intersecting with both the first direction and the first surface (2111).

11. The battery according to claim 10, **characterized in that** in the third direction, two sides of the battery module (20) are each provided with the thermally conductive member (40), and the battery module (20) is in thermal conduction connection with the thermally conductive members (40) on the two sides.

12. The battery according to claim 10, **characterized in that** in the third direction, the battery cell (21) comprises two first surfaces (2111) opposite each other, and the two first surfaces (2111) of the battery cell (21) are each in thermal conduction connection with one of the thermally conductive members (40).

13. The battery according to claim 6, **characterized in that** the battery cell (21) comprises an electrode assembly (213), wherein the electrode assembly (213) comprises a body portion (2131) and a tab (2132) protruding from the body portion (2131), and the tab (2132) is electrically connected to the electrode terminal (214); and in a third direction, projections of the thermally conductive member (40) and the body portion (2131) at least partially overlap and have an overlapping region, and the third direction intersects with both the first direction and the first surface (2111).

14. The battery according to claim 13, **characterized in that** in a second direction, a size of the body portion (2131) is L1, and a size of the thermally conductive member (40) is L2, wherein 0.5≤L2/L1≤1.5, and the first direction, the second direction, and the third direction intersect with each other.

15. The battery according to claim 14, **characterized in that** in the second direction, a size of the overlapping region is L3, wherein 0.5≤L3/L1≤1.

16. The battery according to any one of claims 6 to 15, **characterized in that** the battery (10) further comprises a fluid collecting member (50), wherein the fluid collecting member (50) is in fluid communication with a plurality of thermally conductive members (40); and
one end of the thermally conductive member (40) in the first direction is provided with the fluid collecting member (50), or two ends of the thermally conductive member (40) in the first direction are each provided with the fluid collecting member (50).

17. The battery according to claim 16, **characterized in that** two fluid collecting member (50) are provided, wherein the two fluid collecting members (50) are disposed at one end of the thermally conductive member (40) in the first direction, the two fluid collecting members (50) are arranged along a second direction, and the second direction intersects with both the first direction and the horizontal plane.

18. The battery according to any one of claims 1 to 5, **characterized in that** the battery cell (21) comprises an electrode terminal (214), wherein at least one electrode terminal (214) is provided; and the pressure relief mechanism (215) and the at least one electrode terminal (214) are disposed on one of the second surfaces (2121), or the pressure relief mechanism (215) and the electrode terminal (214) are respectively disposed on the two second surfaces (2121).

19. The battery according to claim 18, **characterized in that** the electrode terminal (214) comprises two electrode terminals (214) having opposite polarities, wherein the two electrode terminals (214) are disposed on one of the second surfaces (2121), or the two electrode terminals (214) are respectively disposed on the two second surfaces (2121).

20. The battery according to any one of claims 1 to 5, **characterized in that** the battery cell (21) comprises an electrode terminal (214), wherein the electrode terminal (214) is disposed on the first surface (2111).

21. The battery according to claim 20, **characterized in that** the battery cell (21) comprises the first surface (2111) and a fourth surface opposite the first surface, wherein the first surface (2111) and the fourth surface are opposite each other in a third direction, the third direction intersecting with both the first direction and the first surface (2111), a concave portion is provided at an edge of the fourth surface, the first surface (2111) is used for arranging the electrode terminal (214), and the electrode terminal (214) protrudes from the first surface (2111) in the third direction and corresponds to the concave portion.

22. The battery according to any one of claims 1 to 5, **characterized in that** the plurality of surfaces further comprise two third surfaces (2112) opposite each other in the first direction, and the first direction, the second direction, and the third direction intersect with each other; and the electrode terminal (214) comprises two electrode terminals (214) having opposite polarities, wherein the two electrode terminals (214) are disposed on one of the third surfaces (2112), or the two electrode terminals (214) are respectively disposed on the two third surfaces (2112).

23. The battery according to any one of claims 1 to 5, **characterized in that** the battery cell (21) comprises an electrode assembly (213), wherein the electrode assembly (213) is a flat wound structure, and an outer surface of the electrode assembly (213) comprises two flat surfaces, the two flat surfaces facing each other in a third direction; or
the electrode assembly (213) is a laminated structure, and a first electrode plate, separator, and second electrode plate of the electrode assembly (213) are stacked along a third direction; wherein
the third direction intersects with both the first direction and the first surface (2111).

24. The battery according to any one of claims 1 to 5, **characterized in that** the battery module (20) comprises at least two battery cells (21), wherein the at least two battery cells (21) are arranged along the first direction.

25. The battery according to any one of claims 1 to 5, **characterized in that** in the first direction, a maximum size of the battery cell (21) is L, and in a second direction, a maximum size of the battery cell (21) is H, wherein a value range of L/H is 0.5-6, and the second direction intersects with both the first direction and the horizontal plane.

26. The battery according to claim 25, **characterized in that** in a third direction, a maximum size of the battery cell (21) is D, wherein a value range of L/D is 1-30; and the first direction, the second direction, and the third direction intersect with each other.

27. The battery according to claim 18, **characterized in that** the electrode terminal (214) and the pressure relief mechanism (215) are disposed on one of the second surfaces (2121), the battery (10) comprises a support plate (311), the battery cell (10) is fixedly connected to the support plate (311) through the other second surface (2121) provided with no electrode terminal (214), and the second direction intersects with both the first direction and the horizontal plane.

28. The battery according to claim 27, **characterized in that** the other second surface is fixedly connected to the support plate (311) through a first adhesion layer (61), and the thermally conductive member (40) is in thermal conduction connection with the first surface (2111) through a second adhesion layer (62), wherein a thermal conductivity coefficient of the first adhesion layer (61) is less than or equal to a thermal conductivity coefficient of the second adhesion layer (62).

29. The battery according to claim 28, **characterized in that** a value range of a ratio of the thermal conductivity coefficient of the first adhesion layer (61) to the thermal conductivity coefficient of the second adhesion layer (62) is 0.1-1.

30. An electric device, **characterized by** comprising the battery (10) according to any one of claims 1 to 29, wherein the battery (10) is configured to supply electrical energy so as to drive the electric device (1) to move.

31. The electric device according to claim 30, **characterized in that** under a condition that the length direction of the battery (10) is different from the moving direction of the electric device (1), the first direction is the moving direction of the electric device (1).
